# EUROPEAN PATENT SPECIFICATION

(11) **EP 3 472 579 B1**
(45) Date of publication and mention of the grant of the patent: **16.08.2023**
(21) Application number: 17800146.7
(22) Date of filing: 18.05.2017
(51) Int. Cl.: G01H 1/06, G01M 13/045, G01N 29/11, G01N 29/14, G01N 29/42, G01N 29/44, G01N 29/46, G01N 29/48, G01D 21/00

(54) **ANALYSIS OF OVERSAMPLED HIGH FREQUENCY VIBRATION SIGNALS**
ANALYSE VON ÜBERABGETASTETEN HOCHFREQUENZSCHWINGUNGSSIGNALEN
ANALYSE DE SIGNAUX DE VIBRATION HAUTE FRÉQUENCE SURÉCHANTILLONNÉS

(30) Priority: 18.05.2016 US 201662338180 P; 31.10.2016 US 201662496878 P; 20.01.2017 US 201762448415 P
(43) Date of publication of application: 24.04.2019
(73) Proprietor: Industrial Consulting Automation Research Engineering (I-CARE), 7000 Mons (BE)
(72) Inventor: GARVEY, Raymond E., Loudon, TN 37774 (US); KING, Willie T., Powell, TN 37849 (US); PATTYN, Axel Christian, 7380 Quievrain (BE); LAMESCH, Tristan Frederic J., 7000 Mons (BE)
(74) Representative: Gevers Patents
(86) International application number: PCT/US2017/033266
(87) International publication number: WO 2017/201247

(56) References cited:
- US-A- 5 852 793
- US-A- 5 895 857
- US-A1- 2008 033 695
- US-A1- 2014 121 996
- US-A1- 2014 324 367
- US-A1- 2014 324 367
- US-A1- 2014 324 389
- US-A1- 2015 027 198
- US-A1- 2016 018 820

## Description

### CROSS-REFERENCE TO RELATED APPLICATIONS

### FIELD

This disclosure relates to the field of machinery maintenance and fault analysis. More particularly, this disclosure relates analysis of oversampled high frequency vibration signals from data collected from sensors in sensory contact with an object of interest.

### BACKGROUND

Dynamic machinery analyzers employ sensory devices responsive to chosen characteristics of interest such as displacement, velocity, pressure, current, voltage, flow, flux, capacitance, and temperature. Outputs from the sensors are analyzed to reveal anomalies in characteristics of interest related to operation, performance, and maintenance of the machinery. Example characteristics of interest may include misalignment, electrical or mechanical imbalance, resonance, looseness, incorrect assembly, broken rotor bar, faulty controller, timing, torsion, soft foot, expansion, rotor dynamics, transient behavior, translation, runout, orbit, periodicity, synchronicity, non-synchronicity, displacement, speed, acceleration, jerk, magnetic flux, electrical current, capacitance, pressure, flow, and temperature. A maximum frequency of interest (F_{MAX}), such as between 500 and 5000 Hz, is selected to identify an upper bound under which characteristics of interest are likely to be found.

Sensors contain at least one responsive sensory element intended to engage in sensory contact with an object of interest. An analog signal from a sensory device is processed by an analog to digital converter to yield an oversampled digital waveform signal. Common digital sampling rates range between 51,200 and 204,800 samples per second. These relatively high frequency digital waveform signals are decimated to the selected F_{MAX}. For example, an analyzer may oversample at 204,800 samples per second, employ 16:1 decimation to create a 12,800 samples per second waveform, which satisfies frequency analysis with F_{MAX} selected as 5 kHz. For another example the 204,800 sampling rate data may be decimated 80:1 to accomplish frequency analysis with F_{MAX} at 1 kHz.

Existing methods used to evaluate oversampled data at frequencies relatively higher than F_{MAX} frequency include the following: acoustic emission, demodulation, impact demodulation method of Azima DLI, HD enveloping (HD_{ENV}) method of SPM Instruments, High Frequency Detection (HFD) method of SKF, PeakVue method of Computational Systems Inc., Shock Pulse Method (SPM) method of SPM Instruments, SonicScan method of Computational Systems Inc., Spectral Energy Emission (SEE) method of SKF, Spike Energy method of Rockwell, Stress Wave Analysis (SWAN), and Ultrasound DB methods of UE Systems and SDT. These methods are often used in addition to or in place of lower frequency machine vibration methods to provide additional information regarding impacts and friction of machinery.

For example, the method referred to as PeakVue^{™}, a trademark of Computational Systems Inc. and described in U.S. Patent No. 5,895,857, provides for high frequency stress wave analysis using oversampled data. The oversampled data is sampled, high pass filtered, rectified, selectively decimated, and subsequently analyzed. A high pass filter removes common machine vibrations such as misalignment and imbalance (such as vibrations below 2 kHz). Full wave rectification of the high frequency stress wave signal converts all negative values to positive numbers (e.g., only absolute values). The oversampled digital data stream is then parsed into sequential sample interval blocks of data. A peak-hold value from each sample interval block is selected and retained while not-selected data (typically greater than 90% of oversampled data) is discarded without analysis. A Fourier transform is performed on the resulting peak-hold data waveform. This selectively decimated waveform is then analyzed using Fast Fourier Transform (FFT) to look for characteristics such as periodicity and severity of faults in rotating machinery. The US patent document US 2014/0324367 A1 discloses evaluation of oversampled data through decimation which allows to deduce part of the signal information. It describes a method of distinguishing a first physical phenomenon captured in a sensory measurement time waveform from a second physical phenomenon captured in the waveform by receiving the waveform on a processor from a sensor in sensory contact with an object undergoing first and second physical phenomena, wherein the first phenomenon is a comparatively fast event. The method further comprises deriving and pass filtering a first rate of change data stream from the time waveform with a processor, wherein each value of the pass filtered first rate of change data stream is based on a difference in extreme amplitudes of the waveform during a first quantity of waveform samples.

While the above and other apparatus and methods exist for performing high frequency wave analysis of oversampled data, such methods require human input during testing and human interpretation during analysis and are therefore are not readily automated. The decimation steps diminish and irrecoverably discard potentially meaningful information. Apparatuses and methods used require relatively large data memory, intense computation, high power consumption, and wide transmission bandwidth. These FFT methods also discard some portion of oversampled high frequency information. There are also some alias frequencies may not be excluded during peak-hold interval analyses in the art. Further, existing techniques often fail to yield information regarding a type of event, such as in impact event, a peak event, and a friction event.

What is needed, therefore, is a method of analyzing high frequency vibration signals that provides automatic analysis of the high frequency signals and automatic identification, classification, and characterization of events while reducing power consumption of related hardware and providing transmitted data at reduced bandwidths.

### SUMMARY

The above and other needs are met by a method and apparatus of analysis of oversampled high frequency vibration signals. In a first aspect, a method of distinguishing a first physical phenomenon captured in a sensory measurement time waveform from a second physical phenomenon captured in the waveform includes: receiving the waveform on a processor from a sensor in sensory contact with an object undergoing first and second physical phenomena, wherein the first phenomenon is a comparatively fast event; deriving and pass filtering a first rate of change data stream from the time waveform with a processor, wherein each value of the pass filtered first rate of change data stream is based on a difference in extreme amplitudes of the waveform during a first quantity of waveform samples; and analyzing with the processor the derived first rate of change data stream to distinguish the comparatively fast first physical phenomenon from the second physical phenomenon captured in the waveform.

According to the invention, the method further includes deriving a pass filtered second rate of change data stream from the time waveform with the processor, wherein each value of the pass filtered second rate of change data stream is based on a difference in extreme amplitudes of the waveform during a second quantity of waveform samples, and wherein the second quantity is larger than the first quantity of waveform samples and analyzing the derived second rate of change data stream to further distinguish the comparatively fast first physical phenomena from the second physical phenomenon captured in the waveform.

In an embodiment, the method further includes comparing the derived first rate of change data stream and the derived second rate of change data stream with the processor to further determine one or more of friction, shear, rubbing, stiction, and sliding characteristics of the first physical phenomenon.

In another embodiment, the method further includes applying expert logic to the derived first rate of change data stream, the expert logic selected from the group consisting of waveform segmentation logic, threshold logic, event type logic, deductive logic, knowledge based logic, metadata logic, application logic, observation logic, and action logic.

In one embodiment, the first and second phenomena are a machine friction event and vibration of a machine, and wherein the applied expert logic distinguishes a friction characteristic of the machine friction event.

In another embodiment, the applied expert logic characterizes the machine friction event as an event selected from the group consisting of negligible metal-to-metal contact, lubrication film breach, rolling contact, sliding contact, mixed mode lubrication regime, boundary lubrication regime, impact, rubbing, severe sliding, and adhesion.

In yet another embodiment, the method further includes applying expert logic in a first step at a first location, the first step comprising a data compression step performed at the first location and applying expert logic in a second step at a second location, the second step comprising a determination of one or more of findings, observations, recommendations, and knowledge based logic performed at the second location.

In one embodiment, the method further includes deriving a decimated stream from the time waveform with the processor, the processor deriving the decimated stream by decimating the time waveform and analyzing the decimated stream with the processor to further determine a characteristic from a list of the first and second physical phenomena.

In another embodiment, the first interval has a duration no greater than 10µs. In yet another embodiment, the first interval has a duration of no greater than 10µs, and wherein the second interval has a duration of no greater than 500µs.

In one embodiment, the method further includes segmenting the derived first rate of change data stream based on rate changes among sequenced values of the first rate of change data stream. In another embodiment, the method includes classifying each segment of the first rate of change data stream as one of an event and nonevent based on a value of the first rate of change data stream within each segment.

In yet another embodiment, the method includes generating compressed data plot information corresponding to the segmented first rate of change data stream. In one embodiment, the method includes transmitting the compressed data plot information from the sensor device to a remote device for analysis.

In one embodiment, selective segmentation includes one of a segment start flat and a segment stop flag occurring when one of an abrupt increase and an abrupt decrease is determined for a rate of change of data stream values.

In another embodiment, selective segmentation analysis includes one or more of: a flag time, a flag score, an average score, a maximum score, a maximum - average score, a maximum score time, a segment profile, a segment causality, a step up or step down from an average of an adjacent segment, a step up or step down from a maximum of an adjacent segment, a duration, and a proportion.

In yet another embodiment, the threshold is a causal threshold which further includes one or more of a probability distribution, a cumulative distribution, a sorted distribution, and a statistical outlier distribution.

In one embodiment, the segment association further includes one or more of an event determination, a non-event determination, and a missed event determination.

In another embodiment, event classification further includes using one or more event scores to determine an event type.

In yet another embodiment, the event type is classified as one or more of a friction event, an impact event, a decay type event, and a multiple event.

In one embodiment, deductive logic further includes evaluating one or more of event information, timestamps, scores, and classification and indicating an observation linked to one or more recommendations to take an action or not take an action.

In another embodiment, the deductive logic further includes one or more of: comparing event information with step to failure information, comparing event information with stage of failure information, comparing event rate of change information with an empirical information, indicating an estimated causal phenomenon, indicating an estimated time of flight, indicating an estimated signal attenuation, indicating an estimated lubrication regime, indicating a life result, and indicating a wear result.

In yet another embodiment, deductive logic further includes one or more steps of voting logic, testing for a false positive finding, and testing for a false negative finding.

### BRIEF DESCRIPTION OF THE DRAWINGS

Further features, aspects, and advantages of the present disclosure will become better understood by reference to the following detailed description, appended claims, and accompanying figures, wherein elements are not to scale to more clearly show the details, wherein like reference numbers indicate like elements throughout the several views, and wherein:
FIG. 1 shows a sensor device according to one embodiment of the present disclosure;
FIG. 2 shows a flowchart of analyzation of a first rate of change data stream according to one embodiment of the present disclosure;
FIGS. 3 and 4 show exemplary first and second intervals of first and second rate of change data streams according to one embodiment of the present disclosure;
FIG. 5 shows a flowchart of analyzation of a first rate of change data stream and a second rate of change data stream according to one embodiment of the present disclosure;
FIG. 6 shows a visual icon of a segment of a rate of change data stream according to one embodiment of the present disclosure;
FIGS. 7A - 7C illustrate segmentation of a rate of change data stream according to one embodiment of the present disclosure;
FIGS. 8 and 9 show characterization of event types based on segment data according to one embodiment of the present disclosure;
FIGS. 10A - 10D illustrate an exemplary waveform, rate of change data stream plots, and compressed data plot corresponding to a decay event according to one embodiment of the present disclosure;
FIGS. 11A - 11C show a compressed data plot based on oversampled waveform data according to one embodiment of the present disclosure;
FIG. 12 shows an output of compressed data plot information from a sensor device according to one embodiment of the present disclosure;
FIG. 13 shows a flowchart of generating compressed data plot information on a sensor device according to one embodiment of the present disclosure;
FIGS. 14A - 14E illustrate analysis of a planar bearing failure according to one embodiment of the present disclosure;
FIGS. 15A - 15E illustrate analysis of a roller bearing failure according to one embodiment of the present disclosure;
FIG. 16 shows an exemplary plot of multiple high pass filters performed on oversampled waveform data according to one embodiment of the present disclosure; and
FIG. 17 shows examples of lubrication boundary characterization according to one embodiment of the present disclosure.

### DETAILED DESCRIPTION

Various terms used herein are intended to have particular meanings. Some of these terms are defined below for the purpose of clarity. The definitions given below are meant to cover all forms of the words being defined (e.g., singular, plural, present tense, past tense). If the definition of any term below diverges from the commonly understood and/or dictionary definition of such term, the definitions below control.

The present disclosure provides a method and apparatus for analyzing a waveform to distinguish a physical phenomenon that is a comparatively fast event. The method of the present disclosure distinguishes a first physical phenomenon, such as a vibration event on a machine, that is a comparatively fast event by analyzing a waveform of the event and characterizes the event based on the waveform of the fast event. The method for analyzing a waveform of the present disclosure enables automatic reporting of a fast event and data corresponding to the fast event while also compressing an amount of data transmitted by a device to provide information related to a fast event.

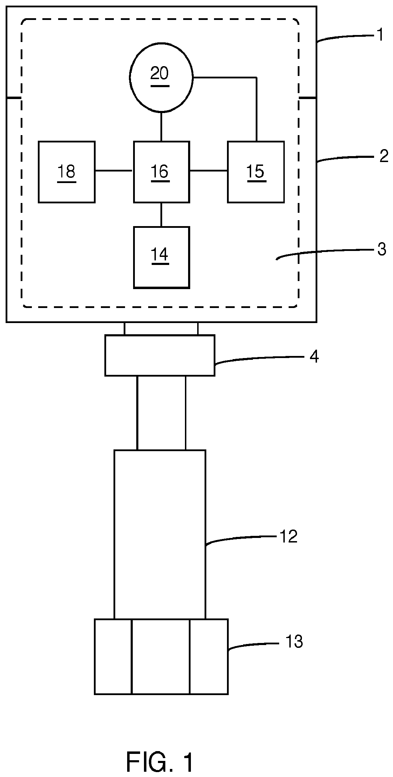

The method of the present disclosure preferably analyzes a waveform corresponding to an event on a machine or other object of interest. Referring to FIG. 1, the waveform is generated using a sensor device 10 that is placed in sensory contact 13 with an object of interest. The sensor device includes a sensor 12 that responds to a physical stimulus on the object of interest such as by outputting a dynamic analog signal response, such as a 4mA to a 20mA or a 0V to 5V analog signal. As referred to in the present disclosure, sensory contact corresponds to the sensory device detecting physical stimuli of the object of interest including: mechanical vibration; airborne vibration; fluid borne vibration; stress wave; seismic wave; pressure wave; electric current; fatigue; fracture; slip; spallation; delamination; collision; abrasions; acoustic emission; adhesion; plastic deformation; cavitation; erosion; rubbing contact; severe sliding contact; stiction; and scintillation. Suitable sensor devices include, for example, the devices described in U.S. Patent No. 9,389,610 and U.S. Patent Publication No. 2014/0121996, the contents of which are incorporated herein by reference in their entireties. An analog sensor output of the sensor on the sensor device is converted to digital waveform data, such as by an analog to digital converter (ADC). The analog sensor output is converted at a rate such that the converted digital waveform data is oversampled (such as between 51,200 and 204,800 samples per second). Oversampled data is also commonly referred to as high frequency data or high sampling rate.

The sensor device further preferably includes a housing 2 having a cover 1 and a sensor connection 4. The housing 2 with cover 1 and sensor connection 4 preferably contains a circuit 3 including an analog to digital converter (ADC) 14 in electronic communication with the sensor and a processor 16 in electronic communication with the analog to digital converter (ADC). A data storage unit 18 is in electronic communication with the processor. A power source 15 such as a battery or fuel cell or energy harvester or external power supply or combination preferably supplies electrical energy to sensor 12, processor 16, and communications connection 20. The data storage unit 18 may comprise either or both of persistent and volatile computer memory. Computer readable instructions are preferably stored on the data storage unit 18 and are operable on the processor 16. Module or software components are installed on the data storage unit 18 and are operable on the processor 16 to analyze the digital data waveform and distinguish a physical phenomenon that is a fast event, as discussed in greater detail below. Components of the sensor device 10 may be located on a single unit, such as a device that is in sensory contact with an object of interest. Additional components, such as additional central processing units and memory units, may be located remotely from the sensor device, such as on a remote diagnostic device. For example, a remote analysis device may be in wired or wireless communication with the sensor device 10 to receive and further analyze oversampled waveform data or other data output from the sensor device 10, such as via wireless communications connection 20.

Sensor device 10, or components thereof, are intended for use as part of a condition monitoring system. Preferred condition monitoring systems receive digital signals from the sensor device 10 and directly process those signals digitally for these systems, device 10 serves as a digital transducer which transforms typically analog sensor signals into machine readable digital information.

A first example digital transducer system is a remote analysis system which comprises a sensor device 10 in WiFi^{™} or Bluetooth^{™} or similar communication with a gateway which in turn communicates wirelessly by cellular communication with a remote analysis server having an internet portal interface for customer interaction. A system of this sort is described on WWW.WIRELESSVIBRATION.EU using trade names I-care, Wi-care, and I-see. This system in the art is benefitted by preferred embodiments of the sensor device 10 including these examples selective segmentation, selective decimation, signal compression, automatic tribological determinations regarding friction, lubrication and wear, automatic generation of observations, machine to machine transfer of low bandwidth high frequency analysis information. Battery life is a critically important factor for systems like this first example. To address battery life very large oversampled data streams are compressed using selective segmentation and selective decimation in the transducer so that small blobs of data such are preferably attached as metadata to each traditionally decimated waveform being transmitted from transducer to gateway.

A second example of the sensor device 10 being incorporated into a system as a digital transducer, is walk around data collection system similar to the Azima DLI Trio CX7 system, as described in http://aziniadli.com/products/data-collectors/trio/, or similar data collection systems using either wired or wireless communication of digital measurement data to a handheld computer. In this second system there is plenty of electrical power bandwidth to enable preferred embodiments to transmit entire oversampled waveforms from the transducer to the handheld. In this situation the oversampled data may be further analyzed by traditional techniques such as FFT, synchronous time averaging, demodulation, etc., if an operator is skilled and desires to do those things in addition to fully automated steps of the present invention.

A third example of the sensor device 10 being incorporated into a system as a digital transducer, is to provide digital signal inputs to a control system or surveillance system. For control systems, it is common for a primary variable input to be an analog signal such as an overall for a dynamic signal; and it may be optional for secondary, tertiary, and quaternary variable inputs to transmit digital information. If a control system requires analog input, it is possible for digital signals of the sensor device to be converted from digital. There are numerous ways to incorporate outputs from a sensor device 10 into online monitoring systems ranging from substituting a pass filtered rate of change data streams in place of an unaltered time domain signals to adding time stamped event information chronological with to historian stored findings.

Data on the sensor device 10 is received on the sensor device, processed, and reported according to embodiments of the present disclosure. Data may be processed with either batched waveform chunks or continuous recursive flow of waveform data. Processes of the present disclosure may be persistent in memory of the sensor device 10, or may preferably not be retained on the data storage unit 18 of the sensor device 10. Instead, lossless data is retrieved and lossless reports transmitted from the sensor device 10, creating an output of suitable bandwidth for processing, transmission, and logistical analysis of the data.

### ANALYSIS OF OVERSAMPLED WAVEFORM OVER ONE OR MORE INTERVALS

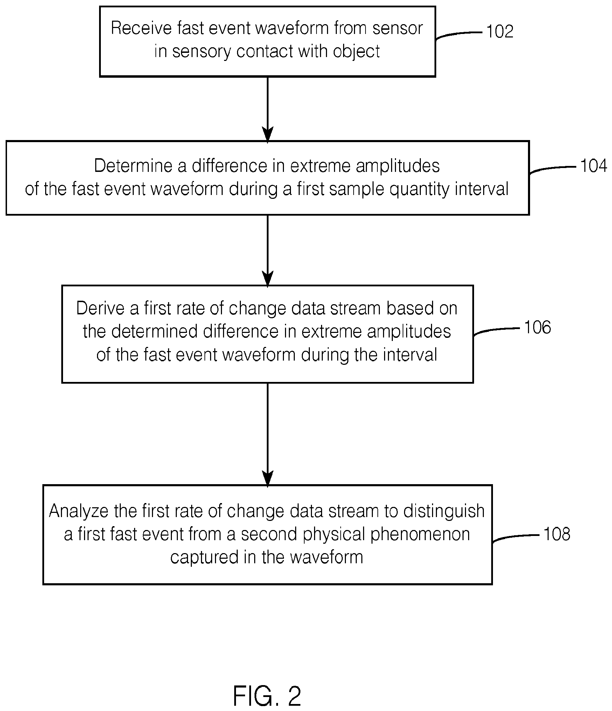

Referring now to FIG. 2, methods of the present disclosure distinguish a first fast event captured in a time waveform. As referred to in the present disclosure, a fast event or fast event segment is an event within oversampled waveform data that is typically diminished, decayed, and even overlooked by existing data decimation practices, such as the system and method disclosed in U.S. Patent No. 5,633,811. In contrast, a not fast event is a relatively long duration interval during which substantial information may be derived using traditional data decimation systems and methods such as those taught in U.S. Patent No. 5,633,811. For example, a not fast event or combination of not fast event would include a one-times running speed high amplitude signal corresponding to an imbalance of a rotating machine wherein oversampled data may be decimated using known decimation practices without loss of substantial information about the imbalance. A specific example of a fast event is a stress wave signal pattern during which the signal rapidly and substantially increases within less than one common digital decimation practice interval. Fast is a subset of dynamic. In the two examples just listed above, imbalance and stress wave signal pattern are both dynamic.

In a first step **102**, time waveform data such as an oversampled waveform data is received on a processor from a sensor device in sensory contact with an object of interest. The oversampled waveform data may include data related to a fast physical phenomenon transduced into a fast event within at least a portion of the oversampled waveform data. In step **104**, a difference between a maximum amplitude and minimum amplitude of the oversampled waveform is determined within a first peak to peak interval. The peak to peak interval is a relatively short time interval or quantity of sequential sample intervals within the oversampled waveform data. In one preferable embodiment, a relatively long peak to peak interval has a duration of 500 µs or less. However, it is also understood that the first peak to peak interval may be less than a designated interval of 500 µs. A maximum amplitude and minimum amplitude of the oversampled waveform within an interval may occur adjacent to one another along the oversampled waveform over an interval that is substantially less than 500 µs, or the maximum amplitude and minimum amplitude of the oversampled waveform may occur at different points along the oversampled waveform at or near a full length of the interval.

A value corresponding to a difference in the maximum amplitude and minimum amplitude of the oversampled waveform data during the first interval is determined and stored on a memory unit. A series of values corresponding to a difference in the maximum amplitude and minimum amplitude of the oversampled waveform data during the first interval are determined and stored on a memory unit, with each sequential value derived from the difference in the maximum amplitude and minimum amplitude of the oversampled waveform data over consecutive first intervals. Each of the first intervals is an adjacent interval of the oversampled waveform data, and preferably each interval substantially overlaps an adjacent interval, such as by from about 5 µs to about 10 µs. The series of values corresponding to differences in the maximum amplitude and minimum amplitude of the oversampled waveform data are used to derive a first rate of change data stream, as shown in step **106**.

Determination of a difference in a maximum amplitude and a minimum amplitude over the first interval of the oversampled waveform data may be applied to various measurements. For example, determination of a rate of change over an interval may include, but is not limited to, displacement or runout waveform data producing velocity information, velocity waveform data producing acceleration information, acceleration waveform data producing jerk information, and jerk waveform data producing hyperjerk information.

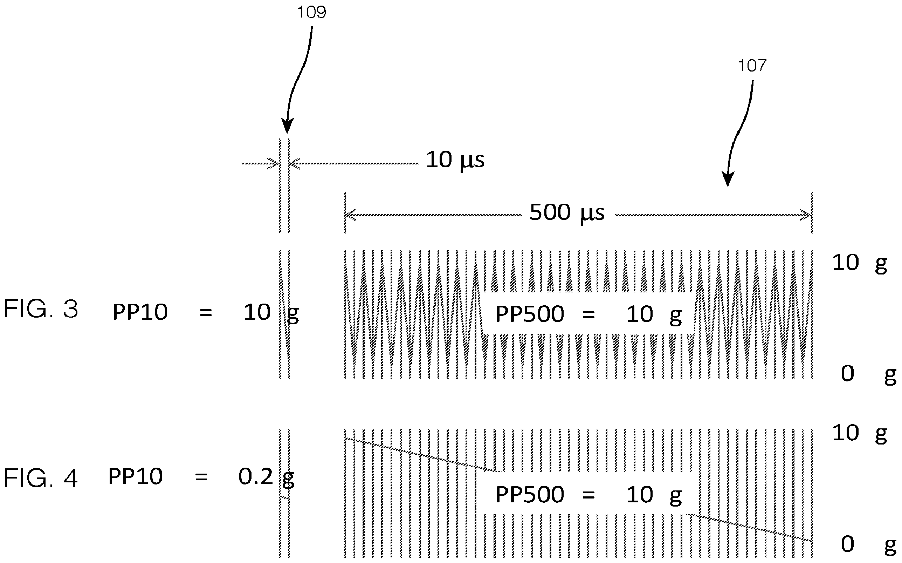

Referring now to FIGS. 3 and 4, exemplary diagrams show determination of a difference in a maximum amplitude and a minimum amplitude of an acceleration time waveform over a first interval **107** (also referred to as PP500 in the Figures). In the diagrams of both FIGS. 3 and 4, the first interval has a duration of 500 µs. In both the diagram of FIG. 3 and the diagram of FIG. 4, a value corresponding to the difference in the maximum amplitude and the minimum amplitude of the oversampled waveform is 10g. In the diagram of FIG. 3, the oversampled waveform has approximately 26 peaks and 25 valleys over the duration of the first interval, and the value ranges from a maximum of 10g to a minimum of 0g. In contrast, the waveform data of FIG. 4 only includes one peak and one valley over the duration of the first 500 µs interval, with a difference in the maximum amplitude and minimum amplitude over the first interval also being 10g.

Deriving a difference in the maximum amplitude of the oversampled waveform and the minimum amplitude of the oversampled waveform data over a duration of the first relatively short interval performs a high pass filter of the oversampled waveform data to remove longer wavelength content of the oversampled waveform data and expose shorter wavelength information. The exposed pass filtered shorter wavelength information is then available for analysis to detect, quantify, and characterize fast events within the oversampled waveform data. For example, when the first interval has a duration of 10 µs, wavelengths shorter than 0.01 ms are passed and half-wavelengths of greater than 0.02 ms are filtered such that frequencies below 50,000 Hz are filtered while retaining higher frequency waveform data.

Referring again to FIG. 1, the derived first rate of change data stream of step 106 is subsequently analyzed to distinguish and characterize a type of event (such as impact, friction, and other types of events) at step **108**. Expert logic, such as waveform segmentation logic, threshold logic, event type logic, deductive logic, knowledge based logic, metadata logic, application logic, and observation logic, is applied to the first rate of change data stream to provide additional characterization and analysis of the derived first rate of change data stream includes segmentation of the oversampled waveform data, flagging of events and nonevents, and compression of the oversampled data for transmittal and reporting, as discussed in greater detail below. Empirical information may be derived from logic for automatically interpreting rate of change data is derived and validated by experimental test results wherein physiological phenomena are in place and sensory data is collected and analyzed in a cause and effect manner. Empirical information may further be used through baseline measurement wherein acceptable levels of measure are derived from a baseline and departures above baseline are considered abnormal.

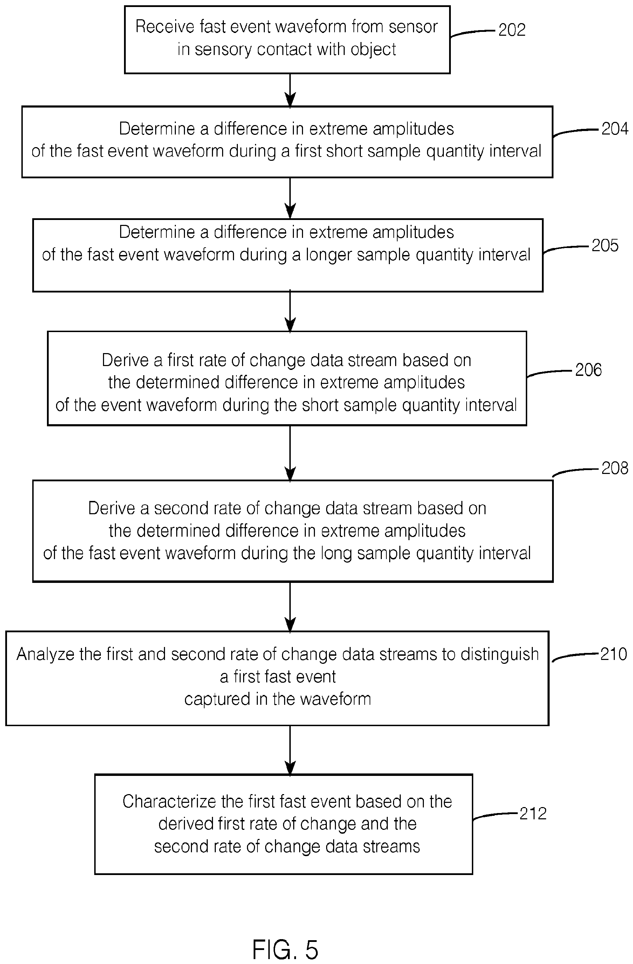

According to the invention, the method of distinguishing a first fast physical phenomenon related event captured in oversampled waveform data includes deriving a second rate of change data stream and further characterizing and analyzing a fast event of the oversampled waveform data based on both the first rate of change data stream and the second rate of change data stream, as shown in FIG. 5. Values of the second rate of change data stream are derived from a difference in a maximum amplitude and a minimum amplitude of the oversampled waveform data over a second interval, wherein the second interval has a duration that is longer than the first interval.

A series of values corresponding to a difference in the maximum amplitude and minimum amplitude of the oversampled waveform data during the second interval are determined and stored on the memory unit, with each value or each sequential value derived from the difference in the maximum amplitude and minimum amplitude of the oversampled waveform data over consecutive second intervals. Preferably each of the intervals is an adjacent interval of the oversampled waveform data, and preferably each interval overlaps an adjacent interval by from about 5 µs to about 10 µs. The series of values corresponding to differences in the maximum amplitude and minimum amplitude of the oversampled waveform data are used to derive the rate of change data stream.

For example, referring again to FIGS. 3 and 4, a second interval 109 (also referred to as PP10 in the Figures) may have a duration of approximately 10 µs. In the example of FIG. 3, a value corresponding to the difference in the maximum amplitude and the minimum amplitude of the oversampled waveform is 10g, the same value as the derived value of the first interval 107. In the example of FIG. 4, a value corresponding to the difference in the maximum amplitude and the minimum amplitude of the oversampled waveform is 0.2g.

Referring again to FIG. 5, in a first step **202** a fast event oversampled waveform is received from a sensor in sensory contact with an object of interest. At step **204**, the difference in extreme amplitudes of the oversampled fast event waveform is determined during a first interval. A difference in extreme amplitudes of the fast event waveform over a second interval is further determined at step **205**. A first rate of change data stream is derived based on the determined difference in extreme amplitudes of the fast event waveform during the first interval in step **206**. A second rate of change data stream is similarly derived over the second interval at step **208**. The derived second rate of change data stream of step 208 is subsequently analyzed to distinguish and characterize a type of event (such as impact, friction, and other types of events) at step **210**. Expert logic is performed on the first rate of change data stream to provide additional characterization and analysis of the derived first rate of change data stream at step **212** including segmentation of the oversampled waveform data, flagging of events and nonevents, and compression of the oversampled data for transmittal and reporting, as discussed in greater detail below.

The first rate of change data stream and second rate of change data stream are analyzed to further characterize or determine a type of event captured in the oversampled data waveform. In the example shown in FIG. 3, a relatively large value corresponding to the difference in the maximum amplitude and minimum amplitude of the oversampled waveform over the second interval in relation to the first interval demonstrates a larger amount of acceleration change and smaller displacement in contrast with the example shown in FIG. 4. A relatively smaller value corresponding to the difference in the maximum amplitude and minimum amplitude of the oversampled waveform over the second interval in relation to the first interval demonstrates larger displacement. FIG. 3 shows values associated with an event such as a friction event, whereas FIG. 4 shows values associated with an event such as an impacting event involving a greater force moving over a greater distance.

When the second interval is an interval of 500 µs, the second interval passes signals having wavelengths shorter than 0.5 ms and filters signals having wavelengths of longer than 0.5 ms. Between 0.5 ms (corresponding to 2 kHz) and 1 ms (corresponding 1 kHz) half-waves may pass in an output of the first interval. Below 1 kHz even half waves are filtered. The first interval having a duration of approximately 10 µs passes signals having wavelengths shorter than 0.01 ms and filters signals having wavelengths longer than 0.01 ms. Between 0.01 ms (corresponding to 100 kHz) and 0.02 ms (corresponding to 50 kHz) half-waves may pass an output of the first interval. Below 50 kHz, even half waves are filtered.

The second, longer interval of 500 µs, filters out most signal content below 1,000 Hz and retains higher frequency rate of change content. The first, shorter interval of 10 µs, filters out most signal content below 50,000 Hz and retains higher frequency rate of change content. The first, shorter interval, is therefore a subset of the second longer interval and content of the first interval that is not within the second interval represents band pass rate of change content > 1,000 Hz and < 50,000 Hz.

In one embodiment, a third rate of change data stream is further derived from the oversampled waveform data for further analysis and characterization of a fast event captured in the waveform data. The third rate of change data stream may be based on a difference in a maximum amplitude and a minimum amplitude over a third interval, the third interval having yet another duration such as between the first and second intervals. The third rate of change data stream may alternatively correspond to additional rate of change values from the oversampled waveform data, such as hyperjerk values.

### SELECTIVE SEGMENTATION

Selected portions of the oversampled waveform data from the sensor device 10 may be further segmented based on analysis of the waveform data. An event, such as a machine event, may comprise one or more consecutive segments, wherein each segment may be defined by characteristics of the waveform data. Segments are selected based on the analyzed first rate of change data stream and second rate of change data stream described above. For example, a segment may be selected based on abrupt changes in values of the first rate of change data stream and second rate of change data stream, or when values exceed or fall below a desired threshold. Event segments represent all or part of an event, and may be either graphically represented on a display or mathematically represented in a time domain versus amplitude domain.

Each segment may be separated by a flag, wherein each flag is located at a point in the oversampled waveform data where the first rate of change data stream values abruptly increase or decrease. For example, a flag may be placed at each point along the oversample waveform data and the first and second rate of change data streams when the rate of change data streams have a substantial increase in value. Flags may designate the initiation of a fast event and termination of a fast event, such as by placement of flags when a rise or decrease in the first and second rate of change data streams is determined.

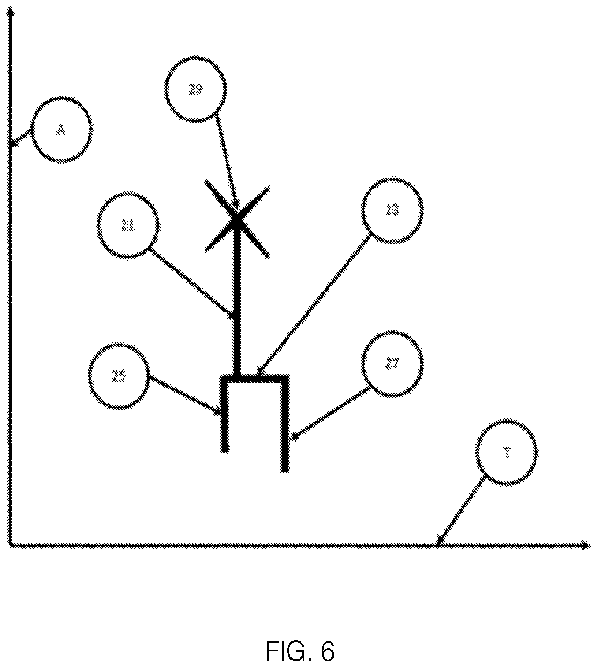

Referring to FIG. 6, each event segment visual representation includes left leg 25, right leg 27, body 23, neck 21, head 29 having amplitude in time T. The left leg 25 and right leg 27 represent minimum to average times of a flag indicating an event or nonevent. The body 23 represents an average value during an interval between flags. A width of the body 23 may be interpreted as a function of characteristics of the oversampled waveform data, such as relating inversely to a frequency of the data. The neck 21 extends from the average value of the body 23 to a maximum value of the head 29. A magnitude of the maximum value of the head 29 relative to the average value of the body 23 may be analyzed to interpret symmetry and variance with similarity and differences to ways skewness, kurtosis, standard deviation, and similar population metrics that may be applied.

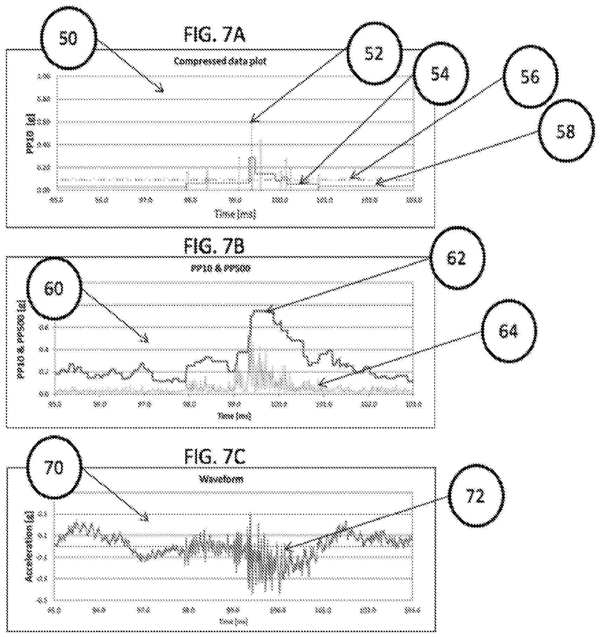

FIG. 7A-7C shows information associated with a compressed data plot for a friction type event. FIG. 7A displays 50 compressed data plot, 52 segment max value, 54 friction type event, 56 statistical threshold, and 58 non-event. FIG. 7B displays 60 two rate of change plots (PP500 and PP10), 62 long wavelength (0.5 ms sample interval) rate of change data stream, and 64 short wavelength (0.01 ms sample interval) rate of change data stream. FIG. 7C displays 70 waveform data plot, and 72 oversampled time waveform. Table 1 shows automatic scoring associated with the compressed data plot of FIG. 7A. Note that automatic segmentation logic determined this event start precisely at 97.91 ms, ending at 100.86 ms, and having a duration of 2.95. Table 3 also shows automatic scoring for a 17.78 ms duration non-events immediately preceding and a 2.74 ms non-event immediately following the friction event. Table 3 is an example of a machine to machine data transfer which may be used to transfer automatically generated, selectively decimated, and meaningful information via wired or wireless means, such as from a digital transducer to a network or other host.

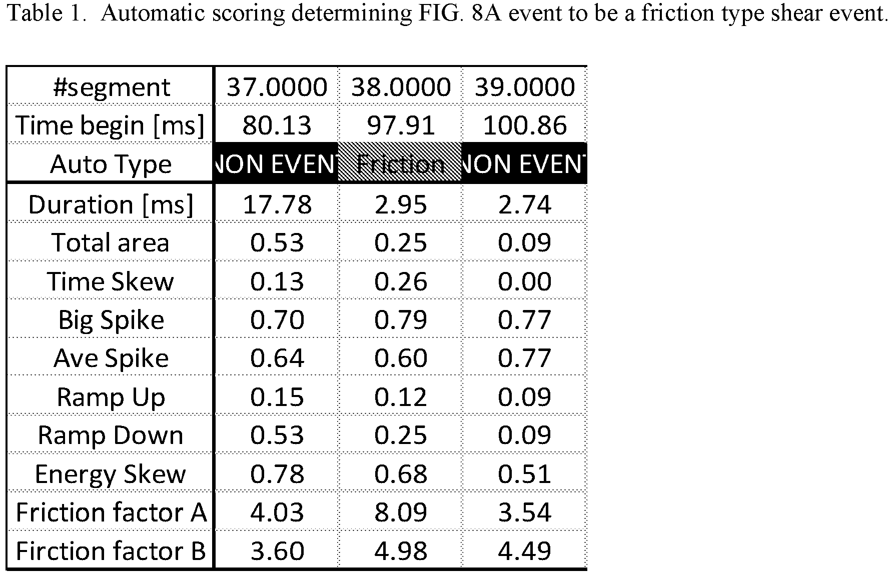

### EVENT CLASSIFICATION

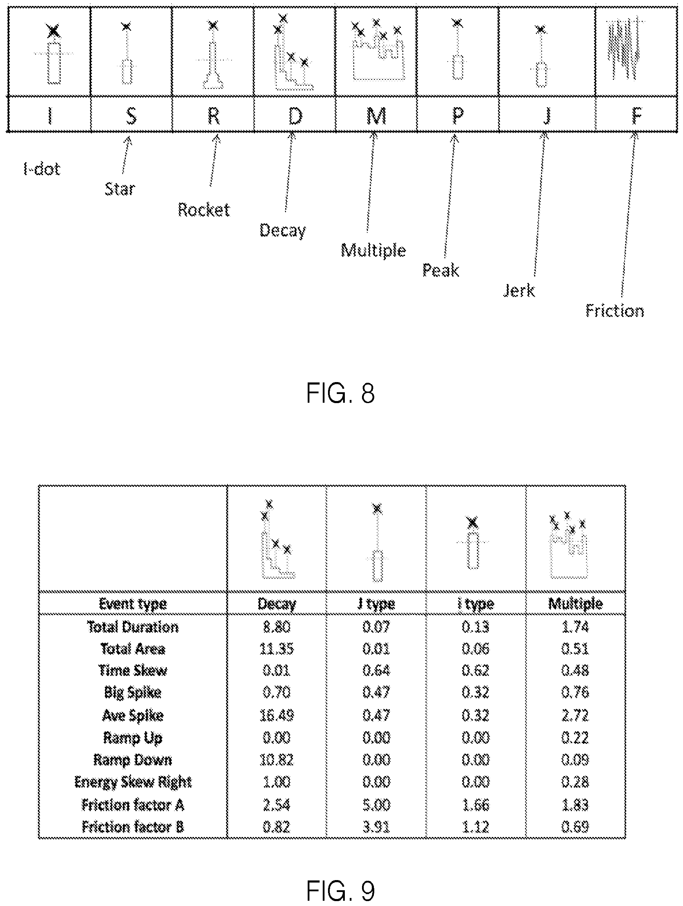

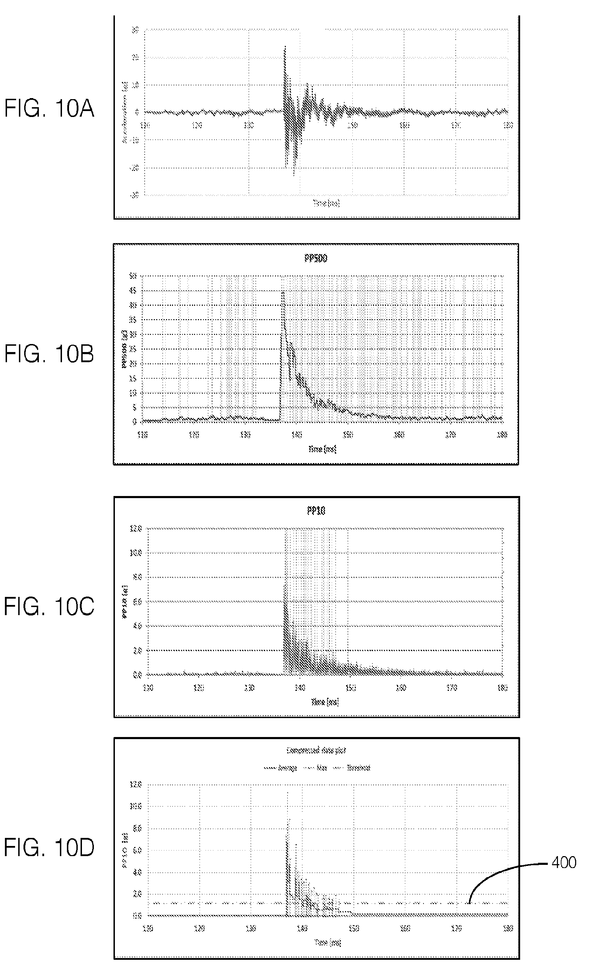

Segmentation and analysis may be performed on any or all of the first rate of change data stream, the second rate of change data stream, and a third rate of change data stream. An event is may be subsequently characterized based on identified segments in the first rate of change data stream or second rate of change data stream, such as based on mathematic or visual characteristics of the segment. For example, as shown in FIG. 8, segments may be classified according to example event types. The event types shown in FIG. 8 are merely representative of some events, and it is understood that various other events may be represented either visually or mathematically using methods known in the art. Exemplary event types in FIG. 8 include I-dot, star, rocket, decay, multiple, peak, jerk, and friction. Similarly, as shown in FIG. 9, event types may be characterized according to data associated with the segments, such as decay, J-type, I type, and multiple events. The event types represented in FIGS. 8 and 9 may correspond to various phenomena on the object of interest such as negligible metal-to-metal contact, lubrication film failure, rolling contact, sliding contact, mixed mode lubrication regime, boundary lubrication regime, impact, severe sliding, and adhesion.FIGS. 10A - 10D illustrate characterization of an event as a decay event. FIG. 10A is a plot of oversampled waveform data corresponding to an acceleration time waveform. FIG. 10B is a plot of values of a first rate of change data stream of the oversampled waveform data over a first interval and FIG. 10C is a plot of values of a second rate of change data stream of the oversampled waveform data over a second interval. FIG. 10D shows a plot of consecutive segments based on the second rate of change data stream of FIG. 10C. The plot of the segmented second rate of change data stream illustrates a shape and data corresponding to a decay-type event. The plot of FIG. 10D is a compressed data plot that may be subject to further characterization and analysis, as discussed in greater detail below.

### COMPRESSED DATA LOGIC

A compressed data plot includes data related to segments of either or both of the first rate of change data stream and the second rate of change data stream. The compressed data plot includes data related to segments of the rate of change data streams in visual or numerical forms for displaying the compressed data plot on a display or for providing data related to the segmented rate of change data streams for further analysis on a processor. For example, the data shown in FIG. 9 may be transmitted from the sensor device 10 to a remote analysis device for further processing and characterization. Information related to the compressed data plot requires substantially less bandwidth to transmit from the sensor device 10 relative to the oversampled waveform data while providing detailed information related to a fast event detected in the oversampled waveform data.

In one embodiment, a threshold determination on the sensor device 10 defines a threshold to first designate whether a segment may correspond to a nonevent or an event exceeding a derived threshold that is subject to further analysis and reporting. FIG. 10D illustrates an exemplary threshold **400** having a value of approximately 1.0. The threshold may be defined and updated according to data of the first rate of change data stream or the second rate of change data stream. For example, the threshold may be defined by creating a data stream containing maximum rate of change data stream values over an interval by finding the maximum rate of change data stream value within a defined interval, such as 5 ms. The data stream is sorted from a maximum value to a minimum value. An early part of the sorted stream should represented maximum rate of change data stream values where no event is occurring. The threshold is further defined according to the method below.
- Method A - determining where slope of sorted values increases dramatically
   ∘ Create a stream of slope values defined as (Sum of x values ahead - Sum of X values behind) ², wherein x represents 30 ms of maximum values.
   ∘ Fit the first 50 ms of slope values to a straight line.
   ∘ Using the first 150 ms of sorted values, determine a standard deviation of a difference between the sorted stream of maximum values and a value of the straight line.
   ∘ A test value is defined as the determined standard deviation multiplied by a user-inputted factor.
   ∘ The stream of sorted maximum values is examined and a threshold value is defined as the maximum value whose slope exceeds the defined test value.
- Method B - determining where sorted value departs from linear behavior
   ∘ Fit the first 100 ms of sorted values to a straight line.
   ∘ Using the first 80 ms of values to calculate standard deviation of a difference between the sorted values and the fit line.
   ∘ Test value defined as the standard deviation multiplied by the same user-inputted factor of Method A.
   ∘ The stream of sorted values is examined and the threshold value is defined as the first value whose difference from the fit line exceeds the test value.
- Threshold value used
   ∘ If Method A produces a value, the Method A value is defined as the threshold value.
   ∘ If Method A does not produce a value but Method B does produce a value, the Method B value is defined as the threshold value.
   ∘ If neither Method A nor Method B produces a value, then a user-inputted threshold value is defined as the threshold value.
   ∘ A user-inputted threshold value may be defined as the threshold value to override the value of either Method A or Method B.

Embodiments of the present disclosure further provide for detecting and measuring effects of physiological phenomena including delineation of a threshold between normally distributed data and causal data. Evidence of causal data within a population is evident when a median is small compared with a mean value for the population. This occurs because phenomenological causal data often spans a much wider range with excursion to very high scores compared with Guassian normal data. Distributed data it typically found near the median. Causal data may be found near the median, near the mean, and at extreme. Extreme data is predominantly causal when causal data is present. Preferred embodiments of finding causal absolute value data include sorting a set of the data and evaluating a rate of change for the sorted distribution to select an inflection or other transition above which normally distributed data falls off and causal data increases.

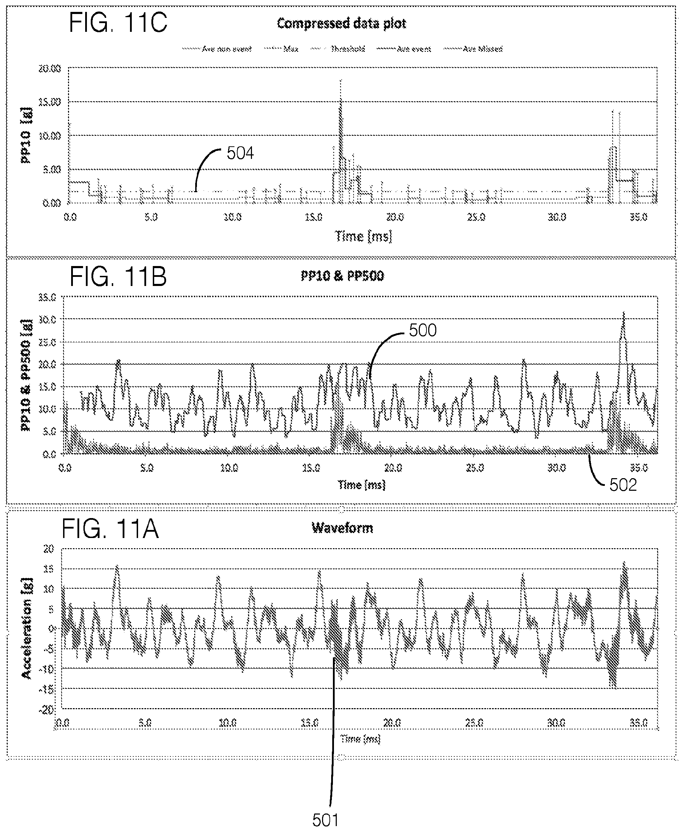

Referring now to FIGS. 11A - 11C, an example of determining a compressed data plot from an oversampled waveform data stream is shown. FIG. 11A shows a plot of oversampled waveform data **501** with a sampling rate of 102.4 kHz captured in a sensory measurement time waveform, in this example an acceleration time waveform. The oversampled waveform data is processed to derive a first rate of change data stream **500** and a second rate of change data stream **502,** plots of which are shown in FIG. 11B. In the example of FIGS. 11A - 11C, an interval of the first rate of change data 500 stream is approximately 500 µs, and an interval of the second rate of change data stream 502 is approximately 10 µs. FIG. 11C shows a compressed data plot of segments of the second rate of change data stream. The compressed data plot includes a threshold line **504** corresponding to a value of approximately 1.672, the threshold line designated according to methods described herein.

The compressed data plot of FIG. 11C shows illustrates segments corresponding to a phenomenon captured in the oversampled waveform data. For example, an event is represented between approximately 16 ms and 18 ms, wherein segments of the second rate of change data stream 502 show a friction-type event occurring within the oversampled waveform data. As shown in FIG. 11B, a value of the second rate of change data stream approaches a value of the first rate of change data stream, indicating an event characterized as a friction-type event.

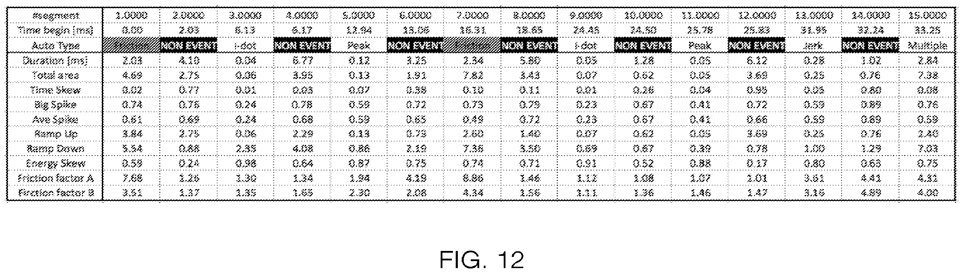

FIG. 12 shows a data output generated on the sensor device 10 that corresponds to the compressed data plot of FIG. 11C. Output data includes various metadata related to the segments of the compressed data plot including a time that each segment begins, a duration of the segment, and other data describing each segment. Output data may also include an indication of the type of event within each segment, such as a friction event, jerk event, or other various events corresponding to characteristics of the segment. When a maximum value of the rate of change data stream within a segment does not exceed a designated threshold, the segment may be classified as a nonevent.

The compressed data plot of FIG. 11C and associated data shown in FIG. 12 compress the oversampled waveform data into segments and automatically classifies events based on the compressed data plot and related output data. The compressed data plot and associated output data significantly reduce an amount of data to be transmitted from the sensor device 10 relative to the oversampled waveform and many known methods of decimation.

In operation, the sensor device 10 receives oversampled waveform data from the sensor 12 in sensory contact with an object of interest, such as a machine. First and second rate of change data streams are derived with the processor 16 on the sensor device 10 from the received oversampled waveform data. One or both of the first and second rate of change data streams are analyzed by the processor 16 on the sensor device and segmented based on characteristics of the first and second rate of change data streams. Compressed data plot information is generated on the sensor device 10 including information related to each segment of the first and second rate of change data streams.

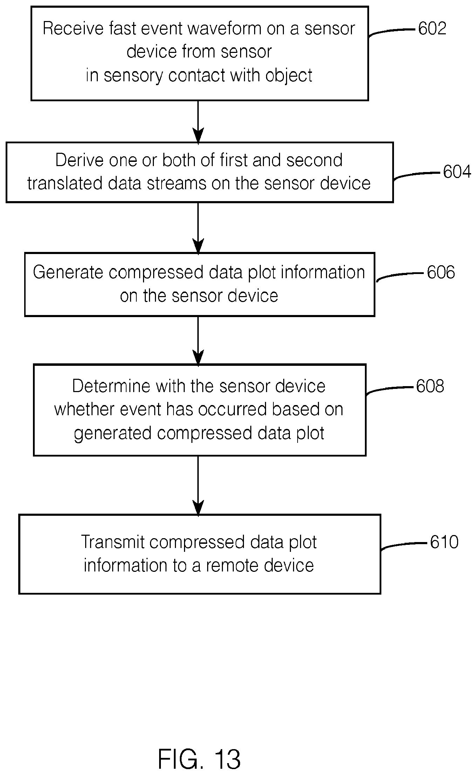

Referring to FIG. 13, the sensor device 10 preferably receives oversampled waveform data on a sensor device at step **602** and derives the first and second rate of change data streams at step **604** on the sensor device. Compressed data plot information is generated at step **606** on the sensor device based on one or both of the first and second rate of change data streams. At step **608**, the compressed data plot information includes a determination of whether one or more segments of the compressed data plot are an event or a nonevent. The sensor device then transmits the compressed data plot information to a remote device for further analysis and characterization of the event at step **610**.

Embodiments of the present disclosure may further include additional rate of change techniques that identify and characterize one or more fast events within oversampled waveform data. For example, a first rate of change data stream and second rate of change data stream may correspond to jerk values. A difference in a maximum amplitude and a minimum amplitude over a first interval and a second shorter interval are determined based on displacement or acceleration values measured on an object of interest. Values of the first rate of change data stream over the first interval may convey information about larger, slower motions such as powerful sliding, collision, and crushing contact. Values of the second rate of change data stream over the second shorter interval may convey information regarding very tiny and fast rubbing oscillations occurring.

Table 1 below is an example of data corresponding to five-step failure progression of a planar bearing and Table 2 is an example of data corresponding to five-stage failure progression of a roller bearing. Tables 2 and 3 report 160 ms peak-hold values measured as differences in a maximum amplitude and minimum amplitude of acceleration values within a first interval of 500 µs and a second shorter interval of 10 µs. The first rate of change data stream is referred to as Jerk500, while the second rate of change data stream is referred to as Jerk10. Differences in acceleration values are divided by a delta time between a point at which the maximum value occurs and the minimum value occurs. A peak hold duration is 0.16.

Data for planar bearing Jerk10 and Jerk500 are found to ramp up sharply after lubricant film boundary lubrication begins to fail between steps 1 and 2 during planar bearing steps. Data for roller bearing Jerk10 and Jerk500 demonstrate characteristic reductions during a brief period at stage 3 bearing failure progression.

**Table 2:**

| Planar | Jerk10 (g/ms) | Jerk500 (g/ms) |
|---|---|---|
| Step 0 | 12,978 | 6 |
| Step 1 | 19,831 | 6 |
| Step 2 | 55,278 | 12 |
| Step 3 | 125,690 | 86 |
| Step 4 | 156,712 | 46 |

**Table 3:**

| Roller | Jerk10 (g/ms) | Jerk500 (g/ms) |
|---|---|---|
| Stage 0 | 36,751 | 18 |
| Stage 1 | 41,008 | 19 |
| Stage 2 | 204,430 | 94 |
| Stage 3 | 84,208 | 54 |
| Stage 4 | 258,280 | 133 |

Embodiments of the present disclosure enable a sensor device that is in sensory communication with an object of interest to automatically monitor the object of interest and determine whether an event is occurring on the object of interest. If an event is detected by the sensor device, data may be reported by the sensor device to a remote device for further analysis. In one embodiment, the sensor device may locally process sensory data related to the object of interest and only transmit compressed data plot information when an event is detected, or otherwise generate an alert that an event has been detected on the object of interest.

The following non limiting examples illustrate the method and apparatus of the present disclosure identifying and characterizing events on an object of interest.

### Example 1: Progression of a Planar Bearing Failure

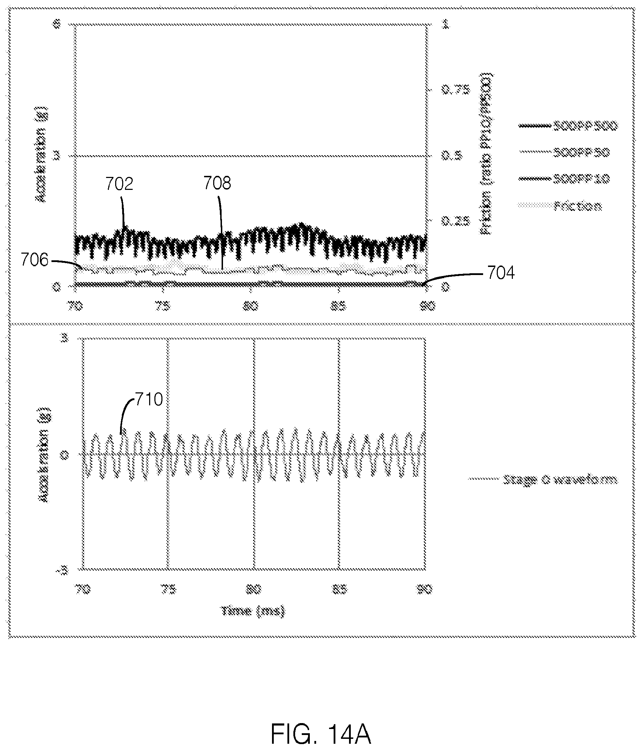

Referring to FIGS. 14A - 14E, a progression of a planar bearing failure is shown using methods of the present disclosure. In FIG. 14A, at an initial stage prior to substantial failure of the bearing is shown wherein both a first rate of change data stream **702** and a shorter second rate of change data **704** stream indicate low friction and steady values. A third rate of change data stream **706** having an interval between an interval of the first rate of change data stream 702 and the second rate of change data stream 704 also illustrates similar activity. A friction value 708, which is based on a relationship between the first rate of change data stream 702 and the second shorter rate of change data stream 704, is low and steady.

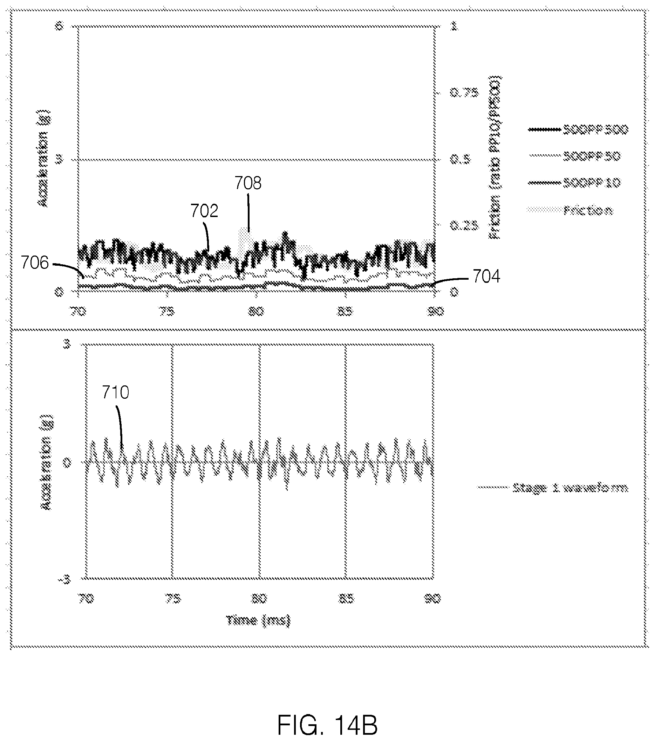

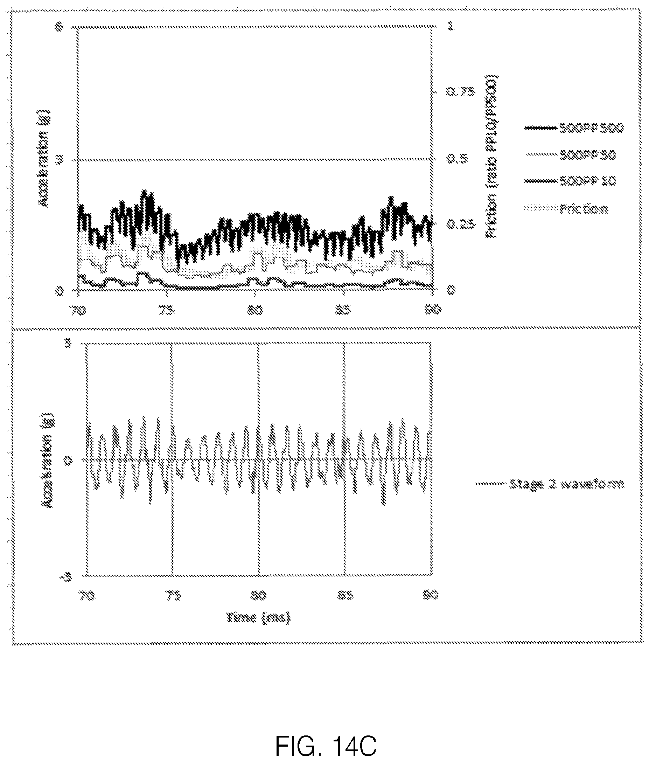

In FIG. 14B, at early stages of bearing failure the second shorter rate of change data stream 704 begins to show activity. The friction value 708 also begins to increase and has reduced steadiness. The third rate of change data stream 706 demonstrates increasing but small activity, and an amplitude of the first rate of change data stream 702 is increasing. Referring to FIG. 14C, as failure progresses the second shorter rate of change data stream 704 shows increasing activity, with the friction value 708 having similar characteristic. The third rate of change data stream 706 shows increased activity, and the first rate of change data stream 702 increases in both amplitude and variability.

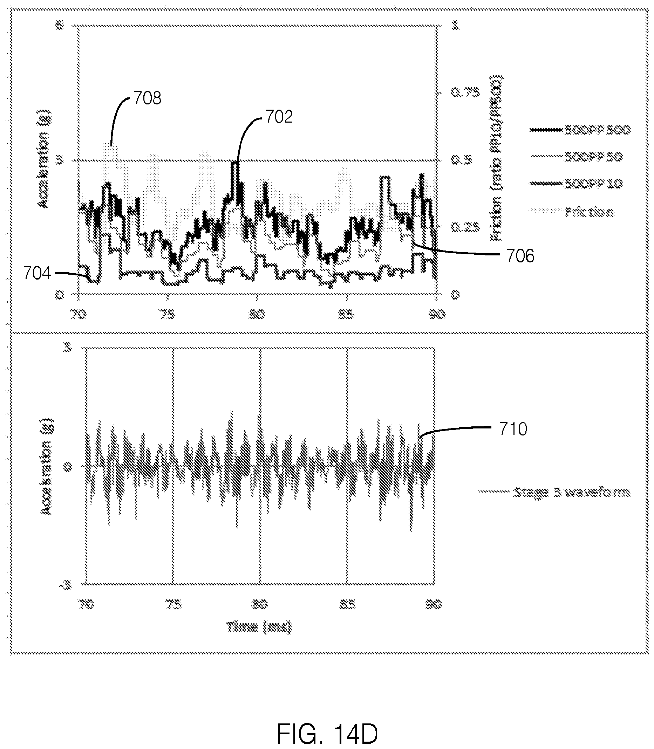

FIG. 14D illustrates continued progressive failure of the planar bearing, substantial fluctuations are present in the first rate of change data stream 702, second rate of change data stream 704, and third rate of change data stream 706. The friction value 708 also increases and includes wide fluctuation. Activity of the first rate of change data stream includes large amplitudes with decay and multiple event types.

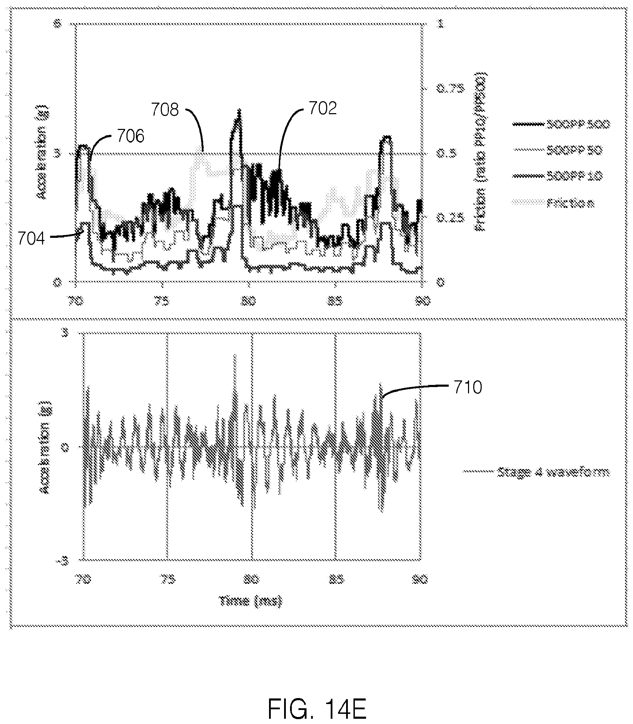

Finally, FIG. 14E illustrates late stage failure of the planar bearing, with very high and defined events within the second shorter rate of change data stream 704 that correspond with the second rate of change data stream 704 and third rate of change data stream 706. Friction remains high, and the first rate of change data stream 702 includes extreme amplitudes with decay and multiple event types. Catastrophic failure is likely to occur quickly when the stage of FIG. 14E is reached.

### Example 2: Progression of a Roller Bearing Failure

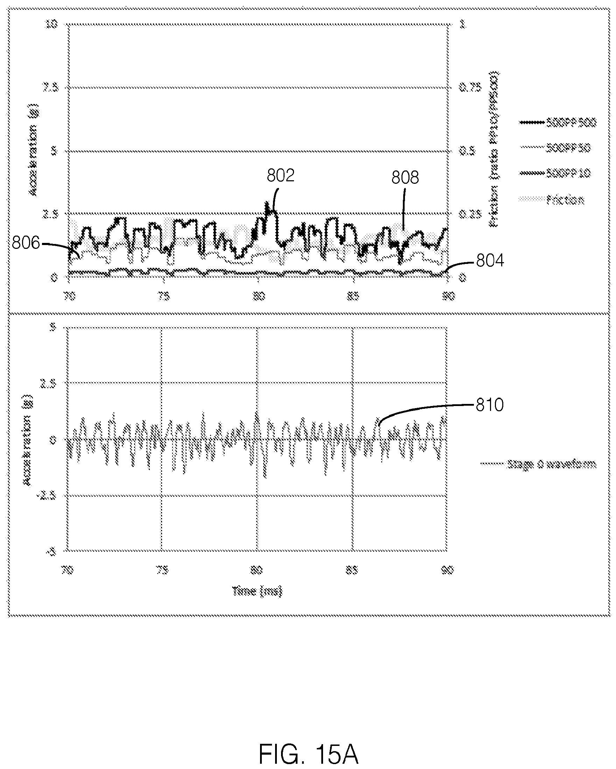

Referring to FIGS. 15A - 15E, analysis of a progression of a planar bearing failure is shown using methods of the present disclosure. In FIG. 15A, a first rate of change data stream 802 includes some activity corresponding to mechanical vibrations but is otherwise within an acceptable range. A second rate of change data stream **804** is shown as being low and relatively steady. A third rate of change data stream **806** bears similarities to the second rate of change data stream 804. A friction value **808** is also low and steady.

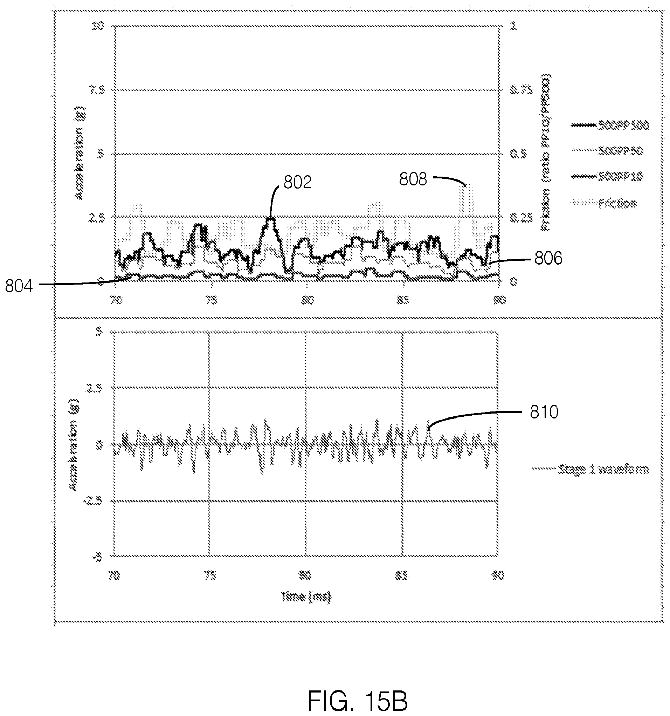

In FIG. 15B, the second shorter rate of change data stream 804 begins to show activity as well as an increase in the friction value 808. The first rate of change data stream 802 and third rate of change data stream 806 include increase amplitude and variation.

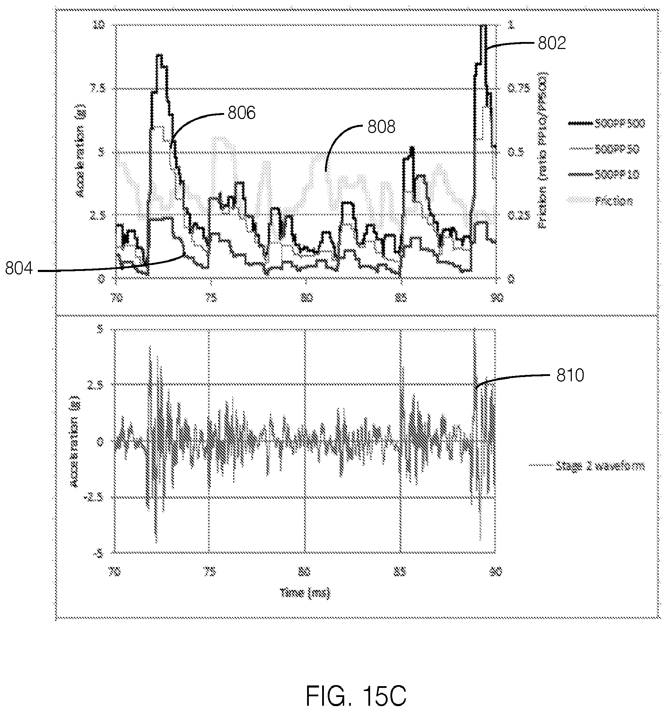

Referring to FIG. 15C, the second shorter rate of change data stream 804 includes pronounced activity that mirrors the second rate of change data stream 806 and third rate of change data stream 808. Friction values 808 increase and include wide variation. The first rate of change data stream 802 includes high variation and amplitude showing well defined events.

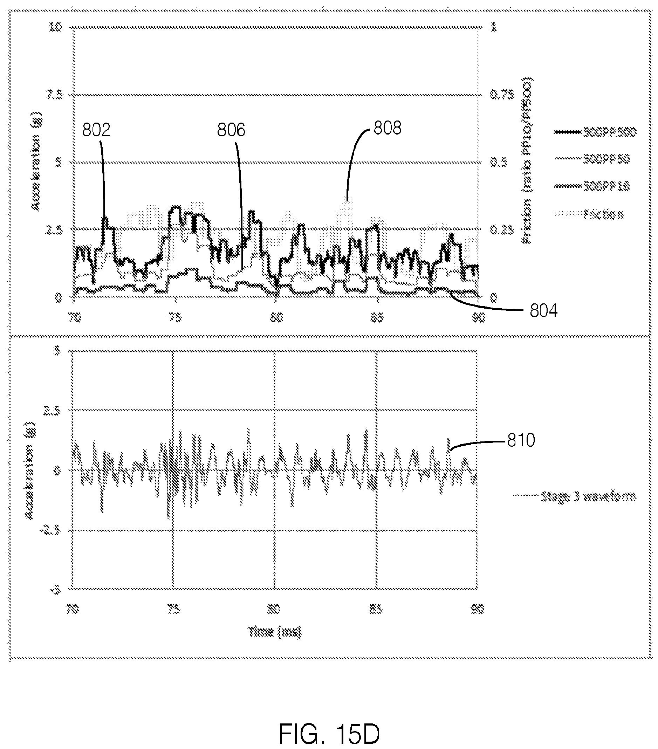

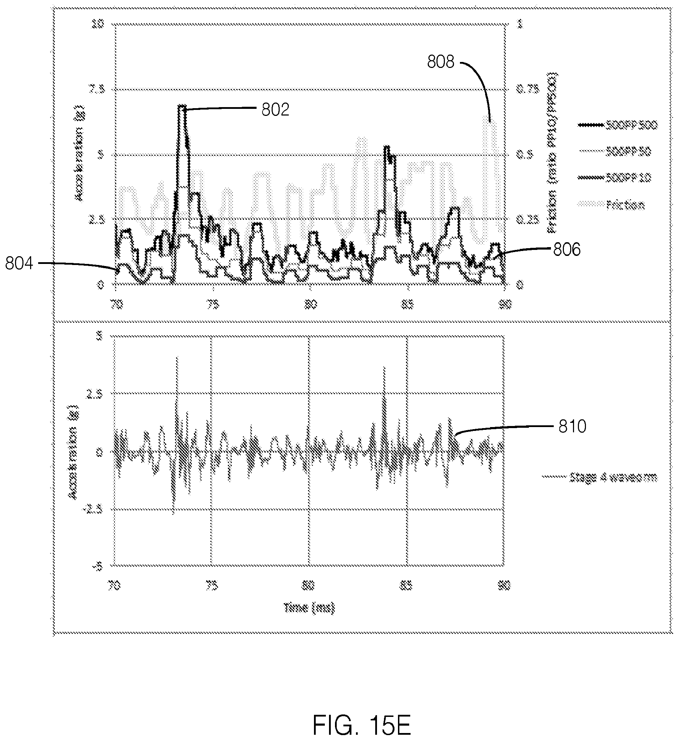

In FIG. 15D, vibrations appear to subside for a brief interval. Friction values remain variable but lower than earlier stages, and the first rate of change data stream 802 events widen and become indistinguishable multiple event types. Subsequently, as shown in FIG. 15E, friction values 808 increase, and the first rate of change data stream 802 includes extreme amplitudes with decay and multiple event types. Catastrophic failure is likely to occur quickly when the stage of FIG. 15E is reached.

Reference is made herein to fast events or fast speed phenomena, intermediate events or intermediate speed phenomena, and slow events or slow speed phenomena. Embodiments of the present disclosure make use of oversampled waveform data to opportunistically or intentionally detect and measure fast, intermediate, and slow duration dynamic phenomena on an object of interest. Exemplary fast, intermediate, and slow events may preferably be defined in Table 4 as follows:

**Table 4:**

| **Speed** | **Fast phenomenon** | **Intermediate phenomenon** | **Slow phenomenon** |
|---|---|---|---|
| Duration range | 0.04 to 1 ms | 1 to 10 ms | > 10 ms |
| Example phenomena | Stress wave from critically damped impact | Stress wave from a not critically damped impact | Sustained input waves from a resonance or fluid-structure interaction or rubbing |

Embodiments of the present disclosure include a method and apparatus for monitoring a variable or transient dynamic condition and includes a setp of receiving digital sensory data that is physiologically responsive to a changing process, mechanism, operation, state, control, deterioration, health, strength, or other meaningful characteristic of interest. Digital measurement data is preferably oversampled at 102,400 samples per second or 204,800 samples per second, and includes data corresponding to displacement, acceleration, flux, voltage, or current.

Preferred embodiments of the present disclosure use oversampled waveform data to opportunistically or intentionally detect and measure fast, intermediate, and slow duration dynamic phenomena using a rate of change of short wavelength, mid wavelength, and long wavelength filters. Table 5 below shows preferred exemplary levels for stress waves, friction, impacts, and machine vibration events.

**Table 5:**

| **Rate of change measurement interval** | **Short** | **Mid** | **Long** |
|---|---|---|---|
| Interval duration | 0.01 ms | 0.05 ms | 0.5 ms |
| Typical sampling rate | >100 samples/ms | >100 samples/ms | >100 samples/ms |
| Example peak-to-peak (g/s) | 10^{3 to 5} g/s | 10¹⁻³ g/s | 10^{-1 to 1} g/s |
| Example peak-to-peak (g) | 10^{-2 to 0} g | 10^{-2 to 1} g | 10^{-1 to 1} g |
| Nominal low pass wavelength | <0.01 ms | <0.05 ms | <0.5 ms |
| Nominal high pass frequency | >100 kHz | >20 kHz | >2 kHz |

| **Steps to failure for sliding contact** | | | |
|---|---|---|---|
| Rate of change measurement interval | Short | Mid | Long |
| Step 0 sliding failure | Rate plot low and inactive (friction also low) | Rate plot mimics fast profile more than slow | Rate plot normal for operation |
| Step 1 sliding contact | Rate plot low and active (friction increase) | Rate plot has new activity | Rate plot max amplitudes increasing |
| Step 2 sliding failure | Rate plot new and increased activity (friction unsteady) | Rate plot shows increasing activity | Rate plot higher amplitudes with more variability |
| Step 3 sliding failure | Rate plot shows high events (high sporadic friction) | Rate plot mimics slow profile more than fast | Rate plot shows high amplitudes with decay and multiple event types |
| Step 4 sliding failure | Rate plot show very high amplitudes with defined events, some mimic intermediate and low profiles | Rate plot mimics slow profile with multiple and decay event types | Rate plot shows extreme amplitudes, decay, & multiple event types - galling etc. may be very soon |
| | | | |

| **Stages to failure for roller bearing** | | | |
|---|---|---|---|
| Rate of change measurement interval | Short | Mid | Long |
| Stage 0 rolling contact | Rate plot low and inactive (friction also low) | Rate plot mimics fast profile more than slow | Rate plot normal for operation |
| Stage 1 rolling contact | Rate plot low and active (friction increase) | Rate plot has new activity similar to slow | Rate plot max amplitudes increasing |
| Stage 2 rolling contact | Rate plot new and increased activity similar to intermediate and slow (friction up and swinging) | Rate plot follows slow profile | Rate plot higher amplitudes with defined event types |
| Stage 3 rolling contact | Rate plot gets better for a brief interval (friction is variable and lower) | Rate plot mimics slow profile | Rate plot levels drop, events widen and become less distinct |
| Stage 4 rolling contact | Rate plot show very high amplitudes with defined events, some mimic intermediate and low profiles | Rate plot mimics slow profile with multiple and decay event types | Rate plot shows extreme amplitudes, decay, & multiple event types - galling etc. may be very soon |

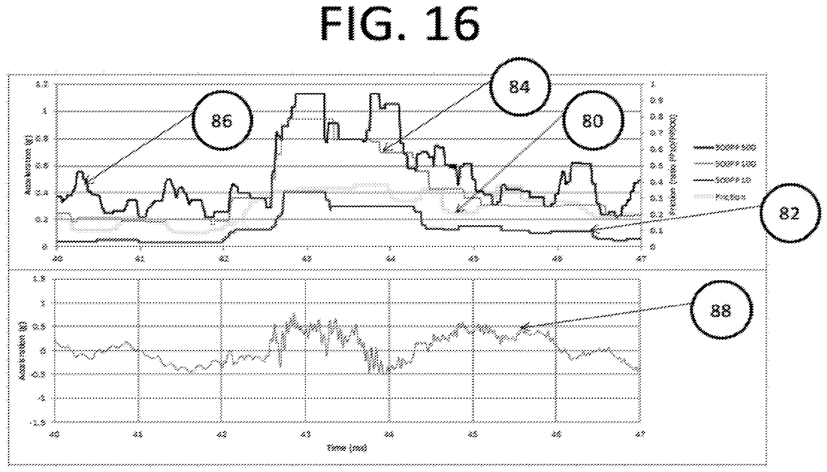

FIG. 16 illustrates an exemplary plot with graph lines showing three low pass wavelength filters, which are also three high pass frequency filters, corresponding to **88** oversampled waveform data and associated activity of each filtered data plot. Also shown is a graph line estimating a friction, **80,** indication derived from comparison among the other lines. In this example the lowest rate of change line, **82**, is an envelope of low pass rate of change for wavelength 0.01 ms, the middle rate of change line, **84**, is an envelope of low pass rate of change for wavelength 0.1 ms, and the uppermost rate of change line, **86**, is an envelope of low pass rate of change for wavelength 0.5 ms. The area between abscissa and lowest line represents tiny displacement vibrations having vibration frequency content greater than approximately 100 kHz. The area between lowest and middle lines represents medium size displacements of moderate forcefulness having frequency content between approximately 10 kH and 100 kHz. The area between the middle and uppermost lines represents relatively large displacements having forceful effect and having frequency content between approximately 2 kHz and 10 kHz.

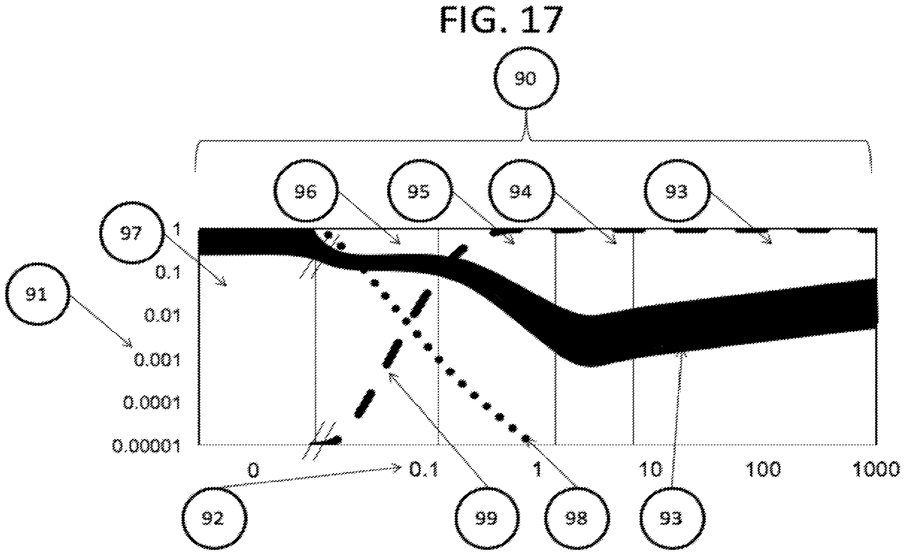

FIG. 17 illustrates a modified version of a Stribeck curve showing five regimes, including a logical extension for a not-lubricated or dry contact extension to the traditional four lubrication regime curve. Figurative elements include **90** five regimes of lubrication and contact; **91** coefficients for friction, wear, and life; **92** fluid film thickness , λ; **93** hydrodynamic (HD) and hydrostatic (HS) lubrication regime; **94** elastohydrodynamic (EHD) lubrication regime; **95** mixed mode lubrication regime; **96** boundary lubrication regime; **97** dry contact regime; **98** wear rate coefficient; and **99** surface remaining useful life coefficient. Dry, boundary & mixed may improve using thin film or solid film. Thin film may refer to ZDTP or other chemically deposited AW/EP oil additive. Thick film may refer to MoS₂ or Graphite or PTFE or other solid substance used alone or as a liquid lubricant additive. Five regimes, not including component life and wear rate, was published in Society for Tribologists and Lubrication Engineers, "The Ultrasonic Tribologist - Using A Sonic/Ultrasonic Sensor To Monitor for Inadequate Lubrication," 62nd Annual Meeting of the Society of Tribologists and Lubrication Engineers, 2007 pages 252-259. From right to left in FIG. 17 figuratively represents first and second lubrication regimes where a fluid film separation is typically present between moving surfaces while load bearing systems exhibit hydrodynamic (HD) and hydrostatic (HS) lubrication in first regime, and elestohydronamic (EHD) lubrication in the second regime. The fluid film typically becomes compromised in mixed and boundary lubrication regimes which causes increased friction, increased surface wear and decreased component life. Extreme contact in absence of even boundary lubrication regime rapidly destroys remaining useful life, rapidly increases wear rate, and drives friction to extreme such that surface movement leads to adhesion, severe sliding, galling and the like. Mixed mode, boundary, and dry contact are detectable using techniques described herein. It is most challenging to perceive sensory evidence of HS, HD, and EHD full fluid film separation; however thin film lubrication depending on extreme pressure (EP) and solid lubricants such as graphite, PTFE, and MoS₂ may be detectable.

In one embodiment, methods of the present disclosure include logic including time of flight. Two or more sensor devices may receive a signal such as an event start. Stress waves originating from a source travel through material to the one or more sensor devices. Triangulation of signals is used to estimate time of flight from the source to each of the sensor devices. Material properties, such as speed of sound properties, may be used to further estimate distance to source from the one or more sensor devices. Time of flight triangulation may be performed on short, intermediate, and long event data.

Embodiments of the present disclosure may further include deductive logic comprising signal attenuation for each of short, mid, and long pass filtered wavelength rate of change data streams, as shown in Table 6 below:

**Table 6:**

| | | | |
|---|---|---|---|
| Rate of change measurement interval | Short | Mid | Long |
| Damping attenuation of stress wave by distance, layers, gaps, mount | Very high | Medium | Low |
| Attenuation of signal by analyzer filters | Very high | Indefinite | Indefinite |
| Attenuation through tuned ultrasonic sensor | Very high | Amplified rather than attenuated | Indefinite |
| Attenuation of ultrasonic stress wave through common 3 to 8 kHz resonant piezoelectric accelerometer | Negligible | Negligible/normal | Negligible |
| Attenuation of signal by common MEMS accelerometer | Extreme | Extreme | Very high |

In one embodiment, voting logic is a second, third, or more confirmation of a finding or evidence of a condition on an object of interest. Voting logic further confirms likelihood of a condition and reduces potential false positive or false negative results. False positive and false negative testing includes multiple measurements or techniques to arrive at a conclusion. Sensory voting logic may be used to confirm a positive or a negative finding using two or more different sensor devices. An independent technique using an exclusive or non-exclusive filtering of a single signal may be used to identify a potential false result. A false positive may be an incorrect determination that a finding is detected or alerted. A false negative may be an incorrect determination that a finding is not detected or alerted. An unwanted consequence of a false positive finding is the potential performance of unnecessary intrusive action. An unwanted consequence of a false negative finding may be the missing of an indication of a problematic condition. After alerting of one or more false positive or negative results, operators may ignore true positive or false indications. Oversampled data analysis provides plentiful measurement data such that a true result may be confirmed repeatedly to reduce a likelihood of false results.

The method of analyzing an oversampled data stream and sensor device of the present disclosure advantageously enables automatic monitoring of an object of interest, such as a machine, and provides reporting of information related to events on the object of interest. By analyzing oversampled data according to the method above, fast events of the oversampled data are analyzed to determine types of events on the machine. Embodiments of the present disclosure allow a sensor device to initially analyze an oversampled waveform and determine whether an event is occurring, and to subsequently output compressed data for further analysis. The sensor device may automatically classify an event type and report the event if the event is determined to exceed a desired threshold, thereby reducing the need of human monitoring of the device or performance of the object of interest. Embodiments of the present disclosure also reduce an amount of data transmitted from the sensor device. Embodiments of the present disclosure further enable analysis and classification of events on an object of interest corresponding to lubrication of components of a machine, as shown in FIG. 17.

Machinery health monitoring may incorporate a combination of vibration analysis and oil analysis techniques. Vibration analysis is typically measured within proximate vicinity to a measurement point. Vibration analysis is a dynamic measurement of characteristics such as rotor displacements in axial and radial movements (mm), velocity (mm/s), and acceleration (m/s² or g). Frequency analysis is employed to monitor synchronous, nonsynchronous, and fluid film characteristics. Oil analysis is typically measured in proximity to a system of a lubricant flow path. Machinery health is monitored by sensing wear debris such as ferrous and nonferrous metals. System contamination is monitored for solid and liquid contaminants. Fluid health is monitored for changes to base oil and additives. Tribology is the study of surfaces in relative motion and of friction, lubrication, and wear. Neither oil analysis nor vibration analysis are focus on the tribological interface between surfaces in relative motion, friction, lubrication, and wear. Existing methods such as envelope vibration and PeakVue^{™} analyses of oversampled vibration data attempt to extend vibration reach to address point vicinity detection of periodic defects. However these techniques require manual setup, extra testing, special equipment, human input, and human interpretation; they are not automated. Passive ultrasonic detection is also used to detect nonspecific turbulence and friction within a proximate vicinity to the ultrasonic detector.

Preferred embodiments of the analysis technique of the present disclosure improve the state of the art and provide a bridge over this gap between oil analysis to deliver tribological information about surfaces in relative motion experiencing various degrees and types of friction, lubrication, and wear. An overarching theme for the present invention is a focus on surfaces in relative motion primarily using high frequency waveform analysis. These techniques are therefore point vicinity specific. They may be fully automated. Equipment information is not required. Human input is not required. Machine to machine transfer of data and compressed information is practical and expeditious. Surface defects may be revealed by type and subtype such. Information collected may be interpreted in categories such as shear, friction, impact, and layers to defect. Timestamp event data may be analyzed for periodicity and for random occorences. Time of flight information can precisely locate distance and location of damage. Lubrication regime determination and dry contact evidence can be detected and used to recommend appropriate corrective actions.

The foregoing description of preferred embodiments of the present disclosure has been presented for purposes of illustration and description. The described preferred embodiments are not intended to be exhaustive or to limit the scope of the disclosure to the precise form(s) disclosed. Obvious modifications or variations are possible in light of the above teachings. The embodiments are chosen and described in an effort to provide the best illustrations of the principles of the disclosure and its practical application, and to thereby enable one of ordinary skill in the art to utilize the concepts revealed in the disclosure in various embodiments and with various modifications as are suited to the particular use contemplated. It should be noted and understood that there can be improvements and modifications made of the present invention described in detail above without departing from the scope of the invention as set forth in the accompanying claims.

## Claims

1. A method of distinguishing a first physical phenomenon captured in a sensory measurement time waveform from a second physical phenomenon captured in the waveform, the method comprising
a. receiving the waveform on a processor (16) from a sensor (12) in sensory contact (13) with an object undergoing first and second physical phenomena, wherein the first phenomenon is a comparatively fast event,
b. deriving and pass filtering a first rate of change data stream (500, 702, 802) from the time waveform with a processor, wherein each value of the pass filtered first rate of change data stream (500, 702, 802) is based on a difference in extreme amplitudes of the waveform during a first quantity of waveform samples
the method being **characterized in that** it further comprises
c. deriving a pass filtered second rate of change data stream (502, 704, 804) from the time waveform with the processor, wherein each value of the pass filtered second rate of change data stream (502, 704, 804) is based on a difference in extreme amplitudes of the waveform during a second quantity of waveform samples, and wherein the second quantity is larger than the first quantity of waveform samples,
d. analyzing with the processor the derived first rate of change data stream (500, 702, 802) and the second rate of change data stream (502, 704, 804) to distinguish the comparatively fast first physical phenomenon from the second physical phenomenon captured in the waveform.

2. The method of claim 1, further comprising comparing the derived first rate of change data stream (500, 702, 802) and the derived second rate of change data stream (502, 704, 804) with the processor to further determine one or more of friction, shear, rubbing, stiction, and sliding characteristics of the first physical phenomenon.

3. The method of claim 1, further comprising applying expert logic to the derived first rate of change data stream (500, 702, 802), the expert logic selected from the group consisting of waveform segmentation logic, threshold logic, event type logic, deductive logic, knowledge based logic, metadata logic, application logic, observation logic, and action logic.

4. The method of claim 3, wherein the first and second phenomena are a machine friction event and vibration of a machine, and wherein the applied expert logic distinguishes a friction characteristic of the machine friction event.

5. The method of claim 4, wherein the applied expert logic characterizes the machine friction event as an event selected from the group consisting of negligible metal-to-metal contact, lubrication film breach, rolling contact, sliding contact, mixed mode lubrication regime, boundary lubrication regime, impact, rubbing, severe sliding, and adhesion.

6. The method of claim 4, further comprising
e. applying expert logic in a first step at a first location, the first step comprising a data compression step performed at the first location, and
f. applying expert logic in a second step at a second location, the second step comprising a determination of one or more of findings, observations, recommendations, and knowledge based logic performed at the second location.

7. The method of claim 1, further comprising:
g. deriving a decimated stream from the time waveform with the processor, the processor deriving the decimated stream by decimating the time waveform, and
h. analyzing the decimated stream with the processor to further determine a characteristic from a list of the first and second physical phenomena.

8. The method of claim 1, further comprising segmenting the derived first rate of change data stream (500, 702, 802) based on rate changes among sequenced values of the first rate of change data stream (500, 702, 802).

9. The method of claim 8, further comprising classifying each segment of the first rate of change data stream (500, 702, 802) as one of an event and nonevent based on a value of the first rate of change data stream (500, 702, 802) within each segment.

10. The method of claim 8, further comprising generating compressed data plot information corresponding to the segmented first rate of change data stream (500, 702, 802).

11. The method of claim 1, wherein pass filtering the first rate of change data stream (500, 702, 802) and the second rate of change data stream (502, 704, 804) comprises a high frequency filter effect from a duration of peak-to-peak measurement intervals.

12. The method of claim 11, wherein a first interval has a duration no greater than 10 µs.

13. The method of claim 12, wherein a second interval has a duration of no greater than 500 µs.

## Patentansprüche

1. Verfahren zum Unterscheiden eines ersten physischen Phänomens, das in einer sensorischen Messzeitwellenform aufgenommen wird, von einem zweiten physischen Phänomen, das in der Wellenform aufgenommen wird, wobei das Verfahren Folgendes umfasst
a. Empfangen einer Wellenform an einem Prozessor (16) von einem Sensor (12) in sensorischem Kontakt (13) mit einem Objekt, das ein erstes und ein zweites physisches Phänomen erfährt, wobei das erste Phänomen ein vergleichsweise schnelles Ereignis ist,
b. Ableiten und Passfiltern eines ersten Änderungsraten-Datenstroms (500, 702, 802) aus der Zeitwellenform mit einem Prozessor, wobei jeder Wert des passgefilterten ersten Änderungsraten-Datenstroms (500, 702, 802) auf einer Differenz extremer Amplituden der Wellenform während einer ersten Menge von Wellenform-Abtastwerten basiert,
Verfahren **dadurch gekennzeichnet, dass** es weiter Folgendes umfasst
c. Ableiten eines passgefilterten zweiten Änderungsraten-Datenstroms (502, 704, 804) aus der Zeitwellenform mit dem Prozessor, wobei jeder Wert des passgefilterten zweiten Änderungsraten-Datenstroms (502, 704, 804) auf einer Differenz extremer Amplituden der Wellenform während einer zweiten Menge von Wellenform-Abtastwerten basiert, und wobei die zweite Menge größer ist als die erste Menge von Wellenform-Abtastwerten,
d. Analysieren mit dem Prozessor des ersten abgeleiteten Änderungsraten-Datenstroms (500, 702, 802) und des zweiten Änderungsraten-Datenstroms (502, 704, 804), um das vergleichsweise schnelle erste physische Phänomen von dem zweiten physischen Phänomen, das in der Wellenform aufgenommen ist, zu unterscheiden.

2. Verfahren nach Anspruch 1, das weiter das Vergleichen des ersten abgeleiteten Änderungsraten-Datenstroms (500, 702, 802) und des abgeleiteten zweiten Änderungsraten-Datenstroms (502, 704, 804) mit dem Prozessor umfasst, um eines oder mehrere von Reibungs-, Scher-, Schabe-, Haftreibungs- und Gleitmerkmalen des ersten physischen Phänomens weiter zu bestimmen.

3. Verfahren nach Anspruch 1, das weiter das Anwenden von Expertenlogik auf den abgeleiteten ersten Änderungsraten-Datenstrom (500, 702, 802) umfasst, wobei die Expertenlogik aus der Gruppe ausgewählt ist, die aus Wellenform-Segmentierungslogik, Schwellenwertlogik, Ereignistypslogik, deduktiver Logik, wissensbasierter Logik, Metadatenlogik, Anwendungslogik, Beobachtungslogik und Aktionslogik ausgewählt ist.

4. Verfahren nach Anspruch 3, wobei das erste und das zweite Phänomen ein Maschinenreibungsereignis und Vibration einer Maschine sind, und wobei die angewandte Expertenlogik ein Reibungsmerkmal des Maschinenreibungsereignisses unterscheidet.

5. Verfahren nach Anspruch 4, wobei die angewandte Expertenlogik das Maschinenreibungsereignis als ein Ereignis charakterisiert, das aus der Gruppe ausgewählt wird, die aus vernachlässigbarem Metall-an-Metall-Kontakt, Schmierfilmbruch, Rollkontakt, Gleitkontakt, Mischmodus-Schmiersystem, Grenzschmiersystem, Aufprall, Reiben, starkem Gleiten und Haften ausgewählt wird.

6. Verfahren nach Anspruch 4, das weiter Folgendes umfasst
e. Anwenden von Expertenlogik bei einem ersten Schritt an einer ersten Stelle, wobei der erste Schritt einen Datenkompressionsschritt umfasst, der an der ersten Stelle durchgeführt wird, und
f. Anwenden von Expertenlogik bei einem zweiten Schritt an einer zweiten Stelle, wobei der zweite Schritt ein Bestimmen einer oder mehrerer Feststellungen, Beobachtungen, Empfehlungen und wissensbasierter Logik, die an der zweiten Stelle durchgeführt werden, umfasst.

7. Verfahren nach Anspruch 1, das weiter Folgendes umfasst:
g. Ableiten eines dezimierten Stroms aus der Zeitwellenform mit dem Prozessor, wobei der Prozessor den dezimierten Strom durch Dezimieren der Zeitwellenform ableitet, und
h. Analysieren des dezimierten Stroms mit dem Prozessor, um weiter ein Merkmal aus einer Liste des ersten und zweiten physischen Phänomens zu bestimmen.

8. Verfahren nach Anspruch 1, das weiter das Segmentieren des abgeleiteten ersten Änderungsraten-Datenstroms (500, 702, 802) basierend auf Ratenänderungen unter sequenzierten Werten des ersten Änderungsraten-Datenstroms (500, 702, 802) umfasst.

9. Verfahren nach Anspruch 8, das weiter das Klassifizieren jedes Segments des ersten Änderungsraten-Datenstroms (500, 702, 802) als eines eines Ereignisses und Nichtereignisses basierend auf einem Wert des ersten Änderungsraten-Datenstroms (500, 702, 802) innerhalb jedes Segments umfasst.

10. Verfahren nach Anspruch 8, das weiter das Generieren komprimierter Datenplot-Informationen umfasst, die dem segmentierten ersten Änderungsraten-Datenstrom (500, 702, 802) entsprechen.

11. Verfahren nach Anspruch 1, wobei das Passfiltern des ersten Änderungsraten-Datenstroms (500, 702, 802) und des zweiten Änderungsraten-Datenstroms (502, 704, 804) einen Hochfrequenzfiltereffekt aus einer Dauer von Spitze-zu-Spitze-Messintervallen umfasst.

12. Verfahren nach Anspruch 11, wobei ein erstes Intervall einer Dauer aufweist, die nicht größer als 10 µs ist.

13. Verfahren nach Anspruch 12, wobei ein zweites Intervall einer Dauer aufweist, die nicht größer als 500 µs ist.

## Revendications

1. Procédé de distinction entre un premier phénomène physique capturé dans une forme d'onde temporelle de mesure sensorielle et un second phénomène physique capturé dans la forme d'onde, le procédé comprenant
a) la réception de la forme d'onde sur un processeur (16) en provenance d'un capteur (12) en contact sensoriel (13) avec un objet subissant un premier et un second phénomène physique, dans lequel le premier phénomène est un événement comparativement rapide,
b) la dérivation et le filtrage d'un premier flux de données de taux de variation (500, 702, 802) à partir de la forme d'onde temporelle à l'aide d'un processeur, dans lequel chaque valeur du premier flux de données de taux de variation filtré (500, 702, 802) est basée sur une différence des amplitudes extrêmes de la forme d'onde pendant une première quantité d'échantillons de forme d'onde,
le procédé étant **caractérisé par le fait qu'**il comprend en outre
c) la dérivation d'un second flux de données de taux de variation filtré (502, 704, 804) à partir de la forme d'onde temporelle à l'aide du processeur, dans lequel chaque valeur du second flux de données de taux de variation filtré (502, 704, 804) est basée sur une différence entre les amplitudes extrêmes de la forme d'onde pendant une seconde quantité d'échantillons de forme d'onde, et dans lequel la seconde quantité est plus grand que la première quantité d'échantillons de forme d'onde,
d) l'analyse, à l'aide du processeur, du premier flux de données de taux de variation dérivé (500, 702, 802) et du second flux de données de taux de variation (502, 704, 804) afin de distinguer le premier phénomène physique comparativement rapide du second phénomène physique capturé dans la forme d'onde.

2. Procédé selon la revendication 1, comprenant en outre la comparaison du premier flux de données de taux de variation dérivé (500, 702, 802) et du second flux de données de taux de variation dérivé (502, 704, 804) à l'aide du processeur pour déterminer en outre une ou plusieurs caractéristiques de friction, de cisaillement, de frottement, de frottement statique et de glissement du premier phénomène physique.

3. Procédé selon la revendication 1 comprenant en outre l'application d'une logique experte au premier flux de données de taux de variation dérivé (500, 702, 802), la logique experte étant sélectionnée dans le groupe constitué de la logique de segmentation de la forme d'onde, de la logique de seuil, de la logique de type d'événement, de la logique déductive, de la logique basée sur les connaissances, de la logique de métadonnées, de la logique d'application, de la logique d'observation et de la logique d'action.

4. Procédé selon la revendication 3, dans lequel les premier et second phénomènes sont un événement de friction de machine et de vibration d'une machine, et dans lesquels la logique experte appliquée distingue une caractéristique de friction de l'événement de friction de machine.

5. Procédé selon la revendication 4, dans lequel la logique experte appliquée caractérise l'événement de friction de machine comme un événement choisi dans le groupe constitué d'un contact métal-métal négligeable, d'une rupture de film de lubrification, d'un contact par roulement, d'un contact par glissement, d'un régime de lubrification en mode mixte, d'un régime de lubrification limite, d'un impact, d'un frottement, d'un glissement sévère et d'une adhérence.

6. Procédé selon la revendication 4, comprenant
e) l'application de la logique experte dans une première étape à un premier emplacement, la première étape comprenant une étape de compression des données effectuée au premier emplacement, et
f) l'application de la logique experte dans une deuxième étape à un second emplacement, la deuxième étape comprenant une détermination d'un ou plusieurs résultats, observations, recommandations et logique basée sur les connaissances, effectuée au second emplacement.

7. Procédé selon la revendication 1, comprenant en outre :
g) la dérivation d'un flux décimé à partir de la forme d'onde temporelle à l'aide du processeur, le processeur déduisant le flux décimé en décimant la forme d'onde temporelle, et
h) l'analyse du flux décimé à l'aide du processeur afin de déterminer une caractéristique à partir d'une liste des premier et second phénomènes physiques.

8. Procédé selon la revendication 1 comprenant en outre la segmentation du premier flux de données de taux de variation dérivé (500, 702, 802) sur la base des taux de variations parmi les valeurs séquencées du premier flux de données de taux de variation (500, 702, 802).

9. Procédé selon la revendication 8 comprenant en outre la classification de chaque segment du premier flux de données de taux de variation (500, 702, 802) comme étant un élément parmi un événement et un non-événement sur la base d'une valeur du premier flux de données de taux de variation (500, 702, 802) à l'intérieur de chaque segment.

10. Procédé selon la revendication 8 comprenant en outre la génération des informations de tracé de données compressées correspondant au premier flux de données de taux de variation segmenté (500, 702, 802).

11. Procédé selon la revendication 1, dans lequel le filtrage du premier flux de données de taux de variation (500, 702, 802) et du second flux de données de taux de variation (502, 704, 804) comprend un effet de filtre haute fréquence à partir d'une durée d'intervalles de mesure crête à crête.

12. Procédé selon la revendication 11, dans lequel un premier intervalle a une durée inférieure ou égale à 10 µs.

13. Procédé selon la revendication 12, dans lequel un second intervalle a une durée inférieure ou égale à 500 µs.
